(19)

**Europäisches Patentamt**
**European Patent Office**
**Office européen des brevets**

(11) **EP 4 579 804 A1**

(12) **EUROPEAN PATENT APPLICATION**
published in accordance with Art. 153(4) EPC

(43) Date of publication:
02.07.2025  Bulletin 2025/27

(21) Application number: 24863839.7

(22) Date of filing: 28.06.2024

(51) International Patent Classification (IPC):
$H01M\ 4/38^{(2006.01)}$    $H01M\ 10/0525^{(2010.01)}$
$H01M\ 4/62^{(2006.01)}$

(52) Cooperative Patent Classification (CPC):
H01M 4/38; H01M 4/62; H01M 10/0525;
Y02E 60/10

(86) International application number:
PCT/CN2024/102624

(87) International publication number:
WO 2025/091988 (08.05.2025 Gazette 2025/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.10.2023  CN 202311426902
31.10.2023  CN 202311435362

(71) Applicant: BTR NEW MATERIAL GROUP CO.,
LTD.
Shenzhen, Guangdong 518106 (CN)

(72) Inventors:
• HE, Peng
Shenzhen, Guangdong 518106 (CN)
• XIAO, Chengmao
Shenzhen, Guangdong 518106 (CN)
• REN, Jianguo
Shenzhen, Guangdong 518106 (CN)
• HE, Xueqin
Shenzhen, Guangdong 518106 (CN)

(74) Representative: Cleveland Scott York
5 Norwich Street
London EC4A 1DR (GB)

(54) **NEGATIVE ELECTRODE MATERIAL AND PREPARATION METHOD THEREFOR, LITHIUM-ION BATTERY**

(57)    Provided are a negative electrode material and a preparation method thereof, as well as a lithium ion battery. a negative electrode prepared from the negative electrode material act as an operating electrode, a metal lithium act as a reference electrode, the metal lithium act as a counter electrode, and an electrolyte contains metal lithium ions, forming a three-electrode battery for charging and discharging, and when the negative electrode material is electrified in a de-intercalation direction, a graph of a relationship between a differential value dQ/dV obtained by differentiating a potential V of the operating electrode based on the reference electrode to a charge and discharge capacity Q and the potential V of the operating electrode is obtained; and in the graph of the relationship between dQ/dV and the potential V, the differential value dQ/dV of the potential V between 20mV and 80mV has a maximum peak value A1, and the differential value dQ/dV of the potential V between 120mV and 210mV has a maximum peak value B1, where B1/A1≤4. According to the negative electrode material provided by the present disclosure, the volume expansion of the negative electrode material can be effectively inhibited and the cycle performance of the negative electrode material can be improved.

FIG. 1

EP 4 579 804 A1

## Description

This application claims priority to Chinese Patent Application No. 202311426902.7, entitled "Anode material and Preparation Method Thereof, and Lithium Ion Battery", filed on October 31, 2023; Chinese Patent Application No. 202311435362.9, entitled "Anode material and Preparation Method Thereof, and Lithium Ion Battery", filed on October 31, 2023, the entire contents of which are incorporated herein by reference.

## TECHNICAL FIELD

The present disclosure relates to the technical field of anode materials, and in particular, to an anode material and a preparation method thereof, and a lithium ion battery.

## BACKGROUND

Lithium ion batteries have the advantages such as high energy density, long cycle life, low environmental pollution, and no memory effect, and thus are widely used in electric vehicles and consumer electronics. In recent years, the rapid development of electric vehicles has increased the demand for the lithium ion batteries with higher energy densities, which prompts researchers to search for battery materials with higher energy density and better cycling performance. The positive and anode materials are the core of the batteries, and determine the operating efficiency of the batteries. At present, the commercial anode material is graphite, the capacity of which is already close to the theoretical upper limit, leaving limited room for further enhancement. Therefore, there is an urgent need to develop a new generation of anode material with high energy density. Silicon-based anode materials are generally considered as a next-generation anode material for batteries, and have advantages such as high capacity, abundant resources, and relative safety.

However, silicon anodes experience significant volume expansion during cycling, which leads to material pulverization, fracturing, and rapid cycling degradation. In view of this issue, multiple solutions have been proposed, including structural design of silicon, adopting techniques such as nanomization and porosity, composite coating methods, and the use of novel electrolytes and binders to improve silicon pole pieces. Among these, nanomization is one of the mainstream approaches. The silicon size is reduced to a nanoscale, reducing the expansion of the silicon, and preventing the pulverization of the silicon. However, existing nanomization solutions have many shortcomings in solving the performance of silicon, and the long-cycling performance has a significant improvement space.

## SUMMARY

The embodiment of the present disclosure provides an anode material and a preparation method thereof, and a lithium ion battery, which can effectively inhibit the volume expansion of the anode material and improve the cycling performance of the anode material.

According to a first aspect, an embodiment of the present disclosure provides an anode material, including an active material. The active material includes a carbon matrix and silicon particles, the carbon matrix has pores, and at least part of the silicon particles are distributed in the pores of the carbon matrix.

An anode prepared from the anode material acts as a working electrode, a metal lithium acts as a reference electrode, the metal lithium acts as a counter electrode, and an electrolyte contains metal lithium ions. The reference electrode, the counter electrode, and the electrolyte form a three-electrode battery for charging and discharging, and when the anode material is electrified in a de-intercalation direction, a graph of a relationship between a differential value dQ/dV obtained by differentiating a potential V of the working electrode based on the reference electrode to a charge and discharge capacity Q and the potential V of the working electrode is obtained.

In the graph of the relationship between dQ/dV and the potential V, the differential value dQ/dV of the potential V between 20mV and 80mV has a maximum peak value A1, and the differential value dQ/dV of the potential V between 120mV and 210mV has a maximum peak value B1, where $B1/A1 \leq 4$.

According to a second aspect, the present disclosure further provides another anode material, including an active material. The active material includes a carbon matrix and silicon particles, the carbon matrix has pores, and at least part of the silicon particles are distributed in the pores of the carbon matrix.

An anode prepared from the anode material acts as a working electrode, a metal lithium acts as a reference electrode, the metal lithium acts as a counter electrode, and an electrolyte contains metal lithium ions, forming a three-electrode battery for charging and discharging, and when the anode material is electrified in a de-intercalation direction, a graph of a relationship between a differential value dQ/dV obtained by differentiating a potential V of the working electrode based on the reference electrode to a charge and discharge capacity Q and the potential V of the working electrode is obtained.

in the graph of the relationship between the differential value dQ/dV and the potential V, the differential value dQ/dV of the potential V between 200mV and 350mV has a maximum peak value A2, with a half-peak width F1, and the differential value dQ/dV of the potential V between 380mV and 470mV has a maximum peak value B2, with a half-peak width F2, where A2>B2, and a following relationship is satisfied: (B2*F2)/(A2*F1)≤0.35.

According to a third aspect, the present disclosure provides a lithium ion battery. The lithium ion battery includes the foregoing anode material.

Compared with the related art, the technical solution of the present disclosure has at least the following beneficial effects:

According to the anode material provided in the first aspect of the present disclosure, the anode material includes the active material. The active material includes the carbon matrix and the silicon particles, the carbon matrix has the pores, at least part of the silicon particles are distributed in the pores of the carbon matrix, thereby improving the capacity of the anode material. The differential value dQ/dV of the potential V between 20mV and 80mV has the maximum peak value A1 that can represent the peak intensity formed when an amorphous lithium-silicon alloy undergoes an amorphous-to-crystalline phase transition at a low de-intercalation potential. The differential value dQ/dV of the potential V between 120mV and 210mV has a maximum peak value B1 that represents the peak intensity formed by lithium and silicon with a particle size greater than 5nm during the lithium de-intercalation process. By controlling the value of B1/A1 within the aforementioned range, the formation of large-size silicon particles and lithium-silicon alloy in the anode material can be reduced, ensuring that the anode material can alleviate volume expansion during cycling, maintaining the structural stability, reducing the collapse of the material structure due to volume expansion of the anode material during the lithium intercalation and de-intercalation process, and effectively reducing side reactions between the anode material and the electrolyte, thereby improving the cycling performance of the anode material.

According to the anode material provided in the second aspect of the present disclosure, the anode material includes the active material. The active material includes the carbon matrix and the silicon particles, the carbon matrix has the pores, at least part of the silicon particles are distributed in the pores of the carbon matrix, thereby improving the capacity of the anode material. when the anode material is electrified in the de-intercalation direction, the differential value dQ/dV of the potential V between 200mV and 350mV has the maximum peak value of A2, with the half-peak width F1, and the differential value dQ/dV of the potential V between 380mV and 470mV has the maximum peak value of B2, with the half-peak width F2, where A2>B2. The anode material satisfies the relationship: (B2*F2)/(A2*F1)≤0.35. The value of (B2*F2)/(A2*F1) is controlled within the above range, which can ensure that the silicon particles are uniformly filled in the pores of the carbon matrix instead of the surface of the carbon matrix, so that the silicon particles are uniformly filled in the pores of the carbon matrix, and meanwhile, the formation of large-size silicon particles can be reduced, thereby reducing the volume expansion of the anode material to obtain the anode material with lower expansion and better cycling performance.

## BRIEF DESCRIPTION OF DRAWINGS

FIG. 1 shows a V-dQ/dV test graph of an anode material according to the first aspect of the present disclosure;
FIG. 2 shows a V-dQ/dV test graph of an anode material according to the second aspect of the present disclosure;
FIG. 3 shows a scanning electron microscope (SEM) image of an anode material prepared in Example 1 of the present disclosure;
FIG. 4 shows an X-ray diffraction (XRD) pattern of the anode material prepared in Example 1 of the present disclosure;
FIG. 5 shows a first charge-discharge curve of the anode material prepared in Example 1 of the present disclosure;
FIG. 6 shows a cycling performance curve of the anode material prepared in Example 1 of the present disclosure;
FIG. 7 shows a scanning electron microscope (SEM) image of an anode material prepared in Example 9 of the present disclosure;
FIG. 8 shows an XRD pattern of the anode material prepared in Example 9 of the present disclosure;
FIG. 9 shows a first charge-discharge curve of the anode material prepared in Example 9 of the present disclosure; and
FIG. 10 shows a cycling performance curve of the anode material prepared by Example 9 of the present disclosure.

## DESCRIPTION OF EMBODIMENTS

In order to better understand the technical solutions of the specification, detailed description of embodiments of the present disclosure will be provided below in conjunction with the accompanying drawings.

It should be made clear that the embodiments described are only part of rather than all of the embodiments of the present disclosure. Based on the embodiments in the present disclosure, all other embodiments obtained by those skilled in the art without any creative efforts fall within the scope of the present disclosure.

The terms used in the embodiments of the present disclosure are merely for the purpose of describing particular embodiments but not intended to limit this specification. The terms "a", "an", "the", and "said" in a singular form in an embodiment of the present disclosure and the attached claims are also intended to include plural forms thereof, unless explicitly noted otherwise in the context.

It should be understood that the term "and/or" used herein is merely an association relationship describing an associated object, indicating that there may be three relationships, for example, A and/or B, and may indicate: only A, both A and B, and only B. In addition, the character "/" herein generally means an "or" relationship between the preceding and subsequent associated objects.

According to a first aspect, an embodiment of the present disclosure provides an anode material, including an active material. The active material includes a carbon matrix and silicon particles, the carbon matrix has pores, and at least part of the silicon particles are distributed in the pores of the carbon matrix.

A anode prepared from the anode material is used as a working electrode, a metal lithium is used as a reference electrode, the metal lithium is used as a counter electrode, and an electrolyte contains metal lithium ions, forming a three-electrode battery for charging and discharging, and when the anode material is electrified in a de-intercalation direction, a graph of a relationship between a differential value dQ/dV obtained by differentiating a potential V of the working electrode based on the reference electrode to a charge and discharge capacity Q and the potential V of the working electrode is obtained.

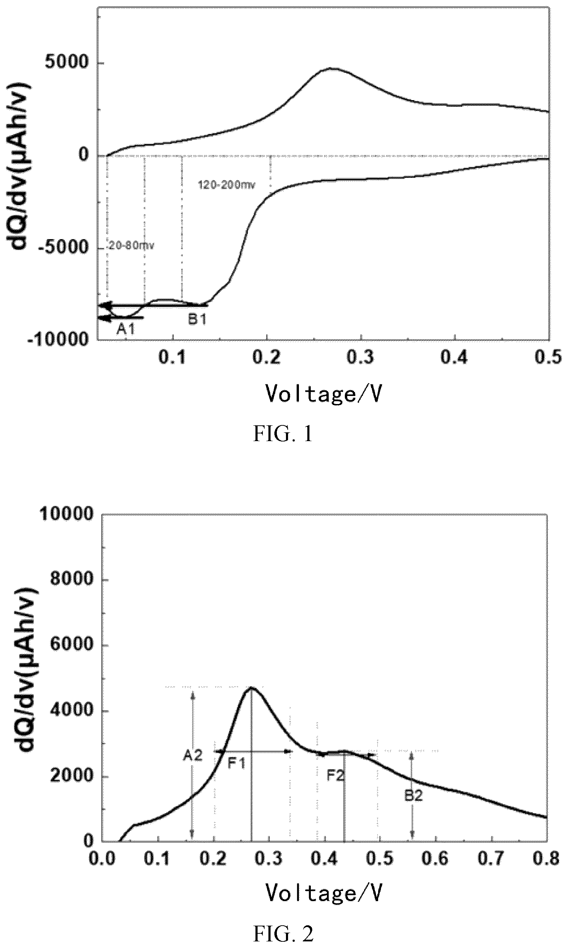

As shown in FIG. 1, in the graph of the relationship between dQ/dV and the potential V, the differential value dQ/dV at the potential V between 20mV and 80mV has a maximum peak value A1, and the differential value dQ/dV at the potential V between 120mV and 210mV has a maximum peak value B1, where B1/A1$\leq$4.

According to the anode material provided by the present disclosure, the anode material includes the active material. The active material includes the carbon matrix and the silicon particles, the carbon matrix has the pores, at least part of the silicon particles are distributed in the pores of the carbon matrix, thereby improving the capacity of the anode material. The differential value dQ/dV of the potential V between 20mV and 80mV has the maximum peak value A1 that can represent the peak intensity formed when an amorphous lithium-silicon alloy undergoes an amorphous-to-crystalline phase transition at a low de-intercalation potential. The differential value dQ/dV of the potential V between 120mV and 210mV has a maximum peak value B1 that represents the peak intensity formed by lithium and silicon with a particle size greater than 5nm during the lithium de-intercalation process. By controlling the value of B1/A1 within the aforementioned range, the formation of large-size silicon particles and lithium-silicon alloy in the anode material can be reduced, ensuring that the anode material can alleviate volume expansion during cycling, maintaining the structural stability, reducing the collapse of the material structure due to volume expansion of the anode material during the lithium intercalation and de-intercalation process, and effectively reducing side reactions between the anode material and the electrolyte, thereby improving the cycling performance of the anode material.

The value of B1/A1 may specifically be 4, 3.9, 3.85, 3.42, 3.27, 2.86, 2.65, 2.45, 2.36, 2.27, 1.98, 1.86, 1.59, 1.47, 1.34, 1.22, 1.05, 0.98, 0.54, or 0.37, etc., or may be another value within the above range, which is not limited herein. When the value of B1/A1 is within the above range, the silicon particles are deposited in the pores of the carbon matrix and have a small size, and the proportion of surface silicon and large-particle silicon in the anode material is reduced, thereby reducing the volume expansion of the anode material, and improving the cycling performance of the anode material.

In some embodiments, the carbon matrix includes at least one of hard carbon, soft carbon, graphite, mesocarbon microbeads, activated carbon, porous carbon, mesoporous carbon, and carbon gel.

In some embodiments, the total pore volume of the anode material after removing the silicon particles is greater than or equal to 0.4cm$^3$/g, which may specifically be 0.4cm$^3$/g, 0.5cm$^3$/g, 0.8cm$^3$/g, 1cm$^3$/g, 1.1cm$^3$/g, 1.3cm$^3$/g, 1.5cm$^3$/g, or 1.8cm$^3$/g, etc., or may be another value within the above range, which is not limited herein. Preferably, the total pore volume of the anode material after removing the silicon particles is greater than or equal to 0.5cm$^3$/g. More preferably, the total pore volume of the anode material after removing the silicon particles is greater than or equal to 0.7cm$^3$/g.

The anode material after removing the silicon particles ideally corresponds to the carbon matrix. An etching method is as follows: the anode material is immersed in a concentrated nitric acid with a concentration of 1M for 4 hours, then an HF acid solution with a mass fraction of 20% is added drop by drop to the anode material to generate yellow smoke. The solution is repeatedly added drop by drop until no more yellow smoke is produced. Finally, residues are digested using the concentrated nitric acid with the concentration of 1M, followed by cleaning and drying to obtain the anode material after removing the silicon particles.

In some embodiments, the pores in the anode material after removing the silicon particles include micropores having a pore diameter less than 2nm, and a ratio of the micropores is greater than or equal to 80%. The ratio of the micropores may specifically be 80%, 82%, 85%, 88%, 90%, 92%, 93%, 95%, 98% or 99%, etc., which is not limited herein. It can be understood that, the size of the silicon particles deposited in the pores of the carbon matrix is determined by the size of the pores. The higher the ratio of micropores, the smaller the average pore diameter of the pores, and the smaller the silicon particles deposited in the pores. Smaller silicon particles deposited in the pores of the carbon matrix lead to less volume expansion of the anode material during cycling, improving the cycling performance of the anode material.

Preferably, the ratio of micropores is greater than or equal to 90%. More preferably, the ratio of micropores is greater than or equal to 95%.

In some embodiments, the average pore diameter of the pores in the anode material after removing the silicon particles is less than or equal to 5nm, which may specifically be 0.1nm, 0.5nm, 1nm, 1.5nm, 2nm, 2.5nm, 3nm, 3.5nm, 4nm, 4.5nm, or 5nm, etc., or may be another value within the above range, which is not limited herein. Preferably, the average pore diameter of the pores in the anode material after removing the silicon particles is less than or equal to 2nm. More preferably, the average pore diameter of the pores in the anode material after removing the silicon particles is less than or equal to 1.8nm.

In some embodiments, the porosity of the anode material after removing the silicon particles is 40% to 60%, which may specifically be 40%, 41%, 43%, 45%, 48%, 50%, 52%, 54%, 56%, 58%, or 60%, etc., or may be another value within the above range, which is not limited herein.

In some embodiments, the silicon particles include at least one of silicon element, silicon oxide, silicon alloy, and silicon-carbon composite. In an example, the silicon element may be amorphous silicon, crystalline silicon, or a composite of crystalline silicon and amorphous silicon, etc., which is not limited herein. The silicon alloy may be silicon lithium alloy, silicon magnesium alloy, or silicon nickel alloy, etc., which is not limited herein.

In some embodiments, the average particle size of the silicon particles is 1nm to 500nm, which may specifically be 1nm, 5nm, 10nm, 50nm, 100nm, 150nm, 200nm, 300nm, 350nm, 400nm, or 500nm, etc., or may be another value within the above range, which is not limited herein. Preferably, the average particle size of the silicon particles is 1nm to 50nm. More preferably, the average particle size of the silicon particles is 1nm to 10nm.

In some embodiments, a mass content of silicon in the silicon particles is greater than or equal to 99%. The mass content of silicon in the silicon particles is within the above range, which is conducive to improving the purity of the silicon particles and reducing impurities.

In some embodiments, the anode material further includes a carbon layer on at least part of a surface of the active material. It can be understood that, the carbon layer can be used as a buffer layer to reduce the volume expansion effect of the anode material to a certain extent, while enhancing the conductivity of the anode material. The carbon layer can further reduce the direct contact between the active material and the electrolyte, inhibiting the excessive growth of a solid electrolyte interphase (SEI) film on the surface of the anode material, stabilizing the interface of the anode material, and improving the coulombic efficiency of the anode material.

In some embodiments, the anode material further includes a carbon layer on at least part of the surface of the active material, and the carbon layer includes at least one of graphitic carbon and amorphous carbon.

In some embodiments, the median particle diameter D50 of the anode material is less than or equal to $10\mu m$, which may specifically be $0.5\mu m$, $1\mu m$, $2\mu m$, $3\mu m$, $4\mu m$, $5\mu m$, $6\mu m$, $7\mu m$, $8\mu m$, $9\mu m$, or $10\mu m$, etc., or may be another value within the above range, which is not limited herein. It can be understood that, the median particle size of the anode material is controlled within the above range, which is conducive to improving the cycling performance of the anode material.

In some embodiments, the specific surface area of the anode material is less than or equal to $5m^2/g$, which may specifically be $0.1m^2/g$, $0.5m^2/g$, $1m^2/g$, $1.5m^2/g$, $2m^2/g$, $2.5m^2/g$, $3m^2/g$, $3.5m^2/g$, $4m^2/g$, $4.5m^2/g$, or $5m^2/g$, etc., or may be another value within the above range, which is not limited herein. The specific surface area of the anode material is controlled within the above range, which is conducive to improving the first efficiency and cycling performance of the lithium battery made of the anode material.

According to a second aspect, an embodiment of the present disclosure provides an anode material, including an active material. The active material includes a carbon matrix and silicon particles, the carbon matrix has pores, and at least part of the silicon particles are distributed in the pores of the carbon matrix.

A anode prepared from the anode material is used as a working electrode, a metal lithium is used as a reference electrode, the metal lithium is used as a counter electrode, and an electrolyte contains metal lithium ions, forming a three-electrode battery for charging and discharging, and when the anode material is electrified in a de-intercalation direction, a graph of a relationship between a differential value dQ/dV obtained by differentiating a potential V of the working electrode based on the reference electrode to a charge and discharge capacity Q and the potential V of the working electrode is obtained.

As shown in FIG. 2, in the graph of the relationship between dQ/dV and the potential V, the differential value dQ/dV of the potential V between 200mV and 350mV has the maximum peak value of A2, with the half-peak width F1, and the differential value dQ/dV of the potential V between 380mV and 470mV has the maximum peak value of B2, with the half-peak width F2, where A2>B2. The anode material satisfies the relationship:

$$(B2*F1)/(A2*F2) \leq 0.35.$$

According to the anode material provided by the present disclosure, the anode material includes the active material. The active material includes the carbon matrix and the silicon particles, the carbon matrix has the pores, at least part of the silicon particles are distributed in the pores of the carbon matrix, thereby improving the capacity of the anode material. when the anode material is electrified in the de-intercalation direction, the differential value dQ/dV of the potential V between 200mV and 350mV has the maximum peak value of A2, with the half-peak width F1, and the differential value dQ/dV of the potential V between 380mV and 470mV has the maximum peak value of B2, with the half-peak width F2, where A2>B2. The anode material satisfies the relationship: (B2*F1)/(A2*F2)≤0.35. In this solution, the peak value A2 can represent the peak intensity formed when an amorphous lithium-silicon alloy undergoes an amorphous-to-crystalline phase transition at a low de-intercalation potential, and the peak value B2 can represent the peak intensity formed by lithium and silicon with a particle size greater than 5nm during the lithium de-intercalation process. The value of (B2*F1)/(A2*F2) is controlled within the above range, which can ensure that the silicon particles are uniformly filled in the pores of the carbon matrix instead of the surface of the carbon matrix, so that the silicon particles are uniformly filled in the pores of the carbon matrix, and meanwhile, the formation of large-size silicon particles can be reduced, thereby reducing the volume expansion of the anode material to obtain the anode material with lower expansion and better cycling performance.

A value of (B2*F1)/(A2*F2) may specifically be 0.01, 0.5, 0.8, 0.1, 0.12, 0.15, 0.18, 0.2, 0.23, 0.25, 0.28, 0.3, 0.32, or 0.35, etc., or may be another value within the above range, which is not limited herein. The value of (B2*F1)/(A2*F2) is controlled within the above range, which can ensure that the silicon particles can be uniformly filled in the pores of the carbon matrix, and ensure that the size of the silicon particles is not too large, so that the proportion of the surface silicon and the large-particle silicon in the anode material is reduced, thereby reducing the volume expansion of the anode material to obtain the anode material with lower expansion and better cycling performance.

In some embodiments, the carbon matrix includes at least one of hard carbon, soft carbon, graphite, mesocarbon microbeads, activated carbon, porous carbon, mesoporous carbon, or carbon gel.

In some embodiments, the total pore volume of the carbon matrix is greater than or equal to $0.4cm^3/g$, which may specifically be $0.4cm^3/g$, $0.5cm^3/g$, $0.8cm^3/g$, $1cm^3/g$, $1.1cm^3/g$, $1.3cm^3/g$, $1.5cm^3/g$, or $1.8cm^3/g$, etc., or may be another value within the above range, which is not limited herein. Preferably, the total pore volume of the carbon matrix is greater than or equal to $0.5cm^3/g$. More preferably, the total pore volume of the carbon matrix is greater than or equal to $0.7cm^3/g$.

In some embodiments, the pores of the carbon matrix include micropores, and a ratio of the micropores is greater than or equal to 80%. The ratio of the micropores may specifically be 80%, 82%, 85%, 88%, 90%, 92%, 93%, 95%, 98% or 99%, etc., which is not limited herein. It can be understood that, the size of the silicon particles deposited in the pores of the carbon matrix is determined by the size of the pores. The higher the ratio of micropores, the smaller the average pore diameter of the pores of the carbon matrix, and the smaller the particle size of the silicon particles deposited in the pores of the carbon matrix. Smaller particle size of the silicon particles deposited in the carbon matrix pores leads to less volume expansion of the anode material during cycling, improving the cycling performance of the anode material. Preferably, the ratio of micropores is greater than or equal to 90%. More preferably, the ratio of micropores is greater than or equal to 95%.

In some embodiments, the average pore diameter of the pores of the carbon matrix is less than or equal to 5nm, which may specifically be 0.1nm, 0.5nm, 1nm, 1.5nm, 2nm, 2.5nm, 3nm, 3.5nm, 4nm, 4.5nm, or 5nm, etc., or may be another value within the above range, which is not limited herein. Preferably, the average pore diameter of the pores of the carbon matrix is less than or equal to 2nm. More preferably, the average pore diameter of the pores of the carbon matrix is less than or equal to 1.8nm.

In some embodiments, the silicon particles include at least one of amorphous silicon, crystalline silicon, silicon oxide, silicon alloy, and a composite of crystalline silicon and amorphous silicon.

In some embodiments, the average particle size of the silicon particles is 1nm to 500nm, which may specifically be 1nm, 5nm, 10nm, 50nm, 100nm, 150nm, 200nm, 300nm, 350nm, 400nm, or 500nm, etc., or may be another value within the above range, which is not limited herein. Preferably, the average particle size of the silicon particles is 1nm to 50nm. More preferably, the average particle size of the silicon particles is 1nm to 10nm.

In some embodiments, a mass content of silicon in the silicon particles is greater than or equal to 99%.

In some embodiments, the anode material further includes a carbon layer on a surface of the active material. It can be understood that, the carbon layer can be used as a buffer layer to reduce the volume expansion effect of the anode material to a certain extent, while enhancing the conductivity of the anode material. The carbon layer can further reduce the direct contact between the silicon particles and the electrolyte, inhibiting the excessive growth of a SEI film on the surface of the anode material, stabilizing the interface of the anode material, and improving the coulombic efficiency of the anode material.

In some embodiments, the anode material further includes a carbon layer on the surface of the active material, and the carbon layer includes an amorphous carbon material.

In some embodiments, the median particle diameter D50 of the anode material is less than or equal to 10μm, which may specifically be 0.5μm, 1μm, 2μm, 3μm, 4μm, 5μm, 6μm, 7μm, 8μm, 9μm, or 10μm, etc., or may be another value within the above range, which is not limited herein. The median particle size of the anode material is controlled within the above range, which is beneficial to improving the cycling performance of the lithium ion battery made of the anode material.

In some embodiments, the specific surface area of the anode material is less than or equal to $5m^2/g$, which may specifically be $0.1m^2/g$, $0.5m^2/g$, $1m^2/g$, $1.5m^2/g$, $2m^2/g$, $2.5m^2/g$, $3m^2/g$, $3.5m^2/g$, $4m^2/g$, $4.5m^2/g$, or $5m^2/g$, etc., or may be another value within the above range, which is not limited herein. The specific surface area of the anode material is controlled within the above range, which is conducive to improving the first efficiency and cycling performance of the lithium battery made of the anode material.

According to a third aspect, the present disclosure provides a preparation method of the anode material, including the following steps:

Step S100, a carbon matrix with pores is provided.

Step S200, vapor deposition is performed on the carbon matrix with pores using a silicon source gas to obtain an active material. The anode material includes the active material. The average pore diameter of the carbon matrix is Dnm, the volume concentration ratio of the silicon source gas is N, the flow rate of the silicon source gas is VL/min, the deposition time of the vapor deposition is t hours, the deposition temperature of the vapor deposition is T°C, and a deposition relationship is controlled to satisfy:

$$K=(10^3V^2ND^3)/(t^2T^{1.5}),$$

where $1.1 \leq K \leq 6.5$.

According to the preparation method of the anode material provided by the present disclosure, the silicon particles are fully filled in the pores of the carbon matrix using a vapor deposition process to prepare the anode material. The deposition of the silicon particles on the surface of the carbon matrix can be reduced by controlling deposition conditions, and the silicon particles are effectively filled in the pores of the carbon matrix, improving the capacity of the anode material. Meanwhile, the size and shape of the silicon particles can be controlled to ensure that the anode material not only can relieve volume expansion but also can maintain structural stability during cycling, reducing the collapse of the material structure caused by volume expansion of the anode material during the lithium intercalation and de-intercalation process, and effectively reducing the occurrence of side reactions, thereby improving the cycling performance of the anode material.

Step S100, the carbon matrix with pores is provided.

It should be noted that, the carbon matrix with pores in the present disclosure may be directly purchased and used, or may be prepared by carbonizing a carbon source, which is not limited herein.

In some embodiments, the step of providing the carbon matrix with pores includes: after the carbon source is carbonized, the product of the carbonization treatment is subjected to acid pickling and activation treatment to obtain the carbon matrix with pores.

In some embodiments, the carbon source includes at least one of husks, starch, coconut shells, rice shells, coal, lignin, sugars, thermoplastic polyurethane (TPU), polylactide, polyglycolide, polyaniline, phenolic resin, polyamide, polyacrylonitrile, polychloroprene, polyphosphate, etc.

In some embodiments, the temperature of the carbonization treatment is 400°C to 1800°C, which may specifically be 400°C, 500°C, 800°C, 1000°C, 1200°C, 1500°C, 1600°C, or 1800°C, etc., which is not limited herein. The time of the carbonization treatment is 1h to 15h, which may specifically be 1h, 3h, 5h, 8h, 10h, 12h, 13h, 14h, or 15h, etc., which is not limited herein.

In some embodiments, the step of acid pickling the product of the carbonization treatment includes: the product of the carbonization treatment is placed in an acid solution with a concentration of 1mol/L to 20mol/L for 0.5 hours to 20 hours.

In some embodiments, the step of acid pickling the product of the carbonization treatment includes: the product of the carbonization treatment is placed in an acid solution with a concentration of 1mol/L to 20mol/L for 0.5 hours to 20 hours. The acid solution includes at least one of hydrochloric acid, nitric acid, sulfuric acid, carbonic acid, acetic acid, benzoic acid, hydrofluoric acid, oxalic acid and phosphoric acid.

The concentration of the acid solution may specifically be 1mol/L, 3mol/L, 5mol/L, 6mol/L, 8mol/L, 10mol/L, 12mol/L, 15mol/L, 18mol/L, or 20mol/L, etc., which is not limited herein.

The time for placing the product of the carbonization treatment in the acid solution may specifically be 0.5h, 0.8h, 1h, 2h, 3h, 5h, 8h, 12h, 15h, 18h, or 20h, etc., which is not limited herein.

In some embodiments, the step of activating the product of the carbonization treatment includes: the product of the carbonization treatment after acid pickling is dried and then placed in a mixed gas of nitrogen and water vapor for activation treatment. It can be understood that the acid pickling and activation treatment are conducive to the directional deposition of silicon particles into the pores of the carbon matrix during the subsequent silicon deposition process, thereby reducing the deposition of silicon particles on the surface of the carbon matrix.

In some embodiments, the step of activating the product of the carbonization treatment includes: the product of the carbonization treatment after acid pickling is dried and then placed in a mixed gas of nitrogen and water vapor for activation treatment. The volume ratio of the water vapor to the nitrogen is (0.1-20):80. The volume ratio of water vapor to nitrogen gas may specifically be 0.1:80, 1:80, 2:80, 3:80, 5:80, 8:80, 10:80, 12:80, 15:80, 18:80, or 20:80, etc., which is not limited herein.

In some embodiments, the step of activating the product of the carbonization treatment includes: the product of the carbonization treatment after acid pickling is dried and then placed in a mixed gas of nitrogen and water vapor for activation treatment. The temperature of the activation treatment is 400°C to 2000°C, and the time of the activation treatment is 0.5 hours to 30 hours.

The temperature of the activation treatment may specifically be 400°C, 500°C, 800°C, 1000°C, 1200°C, 1500°C, 1800°C, or 2000°C, etc., which is not limited herein. The time of the activation treatment may specifically be 0.5h, 1h, 3h, 5h, 8h, 10h, 12h, 15h, 18h, 24h, or 30h, etc., which is not limited herein.

In some embodiments, the carbon matrix includes at least one of hard carbon, soft carbon, graphite, mesocarbon microbeads, activated carbon, porous carbon, mesoporous carbon, and carbon gel.

In some embodiments, the total pore volume of the carbon matrix is greater than or equal to $0.4cm^3/g$, which may specifically be $0.4cm^3/g$, $0.5cm^3/g$, $0.8cm^3/g$, $1cm^3/g$, $1.1cm^3/g$, $1.3cm^3/g$, $1.5cm^3/g$, or $1.8cm^3/g$, etc., or may be another value within the above range, which is not limited herein. Preferably, the total pore volume of the carbon matrix is greater than or equal to $0.5cm^3/g$. More preferably, the total pore volume of the carbon matrix is greater than or equal to $0.7cm^3/g$.

In some embodiments, the pores include micropores having a pore diameter less than 2nm, and a ratio of the micropores is greater than or equal to 80%. The ratio of the micropores may specifically be 80%, 82%, 85%, 88%, 90%, 92%, 93%, 95%, 98% or 99%, etc., which is not limited herein. Preferably, the ratio of micropores is greater than or equal to 90%. More preferably, the ratio of micropores is greater than or equal to 95%.

In some embodiments, the average pore diameter of the pores of the carbon matrix is less than or equal to 5nm, which may specifically be 0.1nm, 0.5nm, 1nm, 1.5nm, 2nm, 2.5nm, 3nm, 3.5nm, 4nm, 4.5nm, or 5nm, etc., or may be another value within the above range, which is not limited herein. Preferably, the average pore diameter of the pores of the carbon matrix is less than or equal to 2nm. More preferably, the average pore diameter of the pores of the carbon matrix is less than or equal to 1.8nm.

In some embodiments, the porosity of the carbon matrix is 40% to 60%, which may specifically be 40%, 41%, 43%, 45%, 48%, 50%, 52%, 54%, 56%, 58%, or 60%, etc., or may be another value within the above range, which is not limited herein.

Step S200, vapor deposition is performed on the carbon matrix with pores using a silicon source gas to obtain an active material. The anode material includes the active material. The average pore diameter of the carbon matrix is Dnm, the volume concentration ratio of the silicon source gas is N, the flow rate of the silicon source gas is VL/min, the deposition time of the vapor deposition is t hours, the deposition temperature of the vapor deposition is T°C, and a deposition relationship is controlled to satisfy: $K=(10^3V^2ND^3)/(t^2T^{1.5})$, where $1.1\leq K\leq6.5$.

A value of K may specifically be 1.1, 1.24, 1.58, 1.69, 1.86, 2.05, 2.87, 3, 3.12, 3.5, 3.8, 3.97, 4, 4.3, 4.5, 4.8, 5.2, 5.4, 5.7, 6, 6.1, 6.38, 6.4, 6.45, 6.48, or 6.5, etc., which is not limited herein. Controlling the K value within the above range is conducive to filling the pores of the carbon matrix with the silicon particles, reducing the generation of surface silicon and large-particle silicon, and controlling the size of the silicon particles at the micro-nano level, thereby alleviating the volume expansion of the anode material, effectively reducing the occurrence of side reactions, and improving the cycling performance of the anode material.

In some embodiments, the silicon source gas includes at least one of monosilane, disilane, monochlorosilane, and dichlorosilane.

In some embodiments, the average particle size of the carbon matrix is 0.5μm to 20μm, which may specifically be 0.5μm, 1μm, 1.5μm, 3μm, 5μm, 8μm, 10.5μm, 12μm, 15μm, 16μm, 18μm, or 20μm, etc., or may be another value within the above range, which is not limited herein.

In some embodiments, the average pore diameter of the carbon matrix is Dnm, where $0.1\leq D\leq20$, and the average pore diameter may specifically be 0.1nm, 0.5nm, 1nm, 3nm, 5nm, 6.5nm, 8.7nm, 10nm, 12.3nm, 15nm, 18nm, or 20nm, etc., or may be another value within the above range, which is not limited herein. It can be understood that controlling the average pore diameter of the carbon matrix within the above range is beneficial to controlling the particle size of the silicon particles, reducing the situation that the size of the silicon particles is too large, alleviating the volume expansion of the silicon particles, and reducing the probability of pulverization and crushing of the anode material, thereby improving the cycling performance of the anode material.

In some embodiments, the volume concentration ratio of the silicon source gas is N, where $0.01\leq N\leq0.8$, and the volume concentration ratio of the silicon source gas may specifically be 1%, 5%, 10%, 15%, 20%, 30%, 50%, 60%, 70%, 75%, or 80%, etc., but is not limited to the recited values, and other unrecited values within the numerical range are also applicable.

In some embodiments, the flow rate of the silicon source gas is V L/min, where $0.5\leq V\leq500$, which may specifically

be 0.5L/min, 1L/min, 5L/min, 10L/min, 50L/min, 100L/min, 150L/min, 200L/min, 300L/min, 400L/min, or 500L/min, etc., or may be another value within the above range, which is not limited herein.

In some embodiments, the deposition time of the vapor deposition is t hours, where $0.5 \leq t \leq 20$, which may specifically be 0.5h, 1h, 3h, 5h, 6h, 8h, 10h, 12h, 15h, 18h or 20h, etc., which is not limited herein.

In some embodiments, the deposition temperature of the vapor deposition is T°C, where $300 \leq T \leq 800$, which may specifically be 300°C, 350°C, 400°C, 500°C, 600°C, 650°C, 700°C, or 800°C, etc., or may be another value within the foregoing range, which is not limited herein. It can be understood that controlling the temperature of the vapor deposition within the above range is beneficial to controlling the crystal form of the silicon particles, reducing the crystallinity of the silicon particles, and reducing the conversion of amorphous silicon to crystalline silicon, thereby reducing the volume expansion of the anode material, and improving the cycling performance of the anode material.

In some embodiments, the method further includes: the active material is performed the carbon coating treatment to obtain an anode material with a carbon layer on the surface. The carbon coating treatment includes at least one of solid-phase carbon coating, liquid-phase carbon coating and gas-phase carbon coating.

It can be understood that, the carbon coating treatment is performed on the active material to form the carbon layer on the surface of the active material. On one hand, the direct contact between the anode material and the electrolyte can be reduced, and the occurrence of side reactions between the anode material and the electrolyte can be reduced, thereby improving the electrochemical performance of the anode material. On the other hand, the mechanical stress caused by the volume expansion of the anode material can also be alleviated, improving the structural stability of the anode material, and improving the interface stability, thereby improving the cycling performance of the anode material.

In some embodiments, the specific step of the carbon coating treatment includes: after the active material is heated, a protective gas and a carbon source gas are introduced, and the carbon source gas is thermally cracked to obtain the anode material with a carbon layer on the surface.

In some embodiments, the specific step of the carbon coating treatment includes: after the active material is heated, a protective gas and a carbon source gas are introduced, and the carbon source gas is thermally cracked to obtain the anode material with a carbon layer on the surface. The carbon source gas is a hydrocarbon.

In some embodiments, the specific step of the carbon coating treatment includes: after the active material is heated, a protective gas and a carbon source gas are introduced, and the carbon source gas is thermally cracked to obtain the anode material with a carbon layer on the surface. The carbon source gas includes at least one of methane, ethylene, acetylene, propyne, propylene, propane, toluene, benzene, styrene and phenol.

In some embodiments, the specific step of the carbon coating treatment includes: after the active material is heated, a protective gas and a carbon source gas are introduced, and the carbon source gas is thermally cracked to obtain the anode material with a carbon layer on the surface. The temperature of the thermal cracking is 600°C to 1000°C, and the time of the thermal cracking is 30 minutes to 24 hours.

The temperature of the thermal cracking may specifically be 600°C, 620°C, 650°C, 680°C, 700°C, 760°C, 870°C, 900°C, 920°C, 950°C, 980°C, or 1000°C, etc., which is not limited herein. The time of the thermal cracking may specifically be 30min, 1h, 3h, 5h, 8h, 12h, 15h, 18h, 20h, 22h, or 24h, etc., which is not limited herein.

In some embodiments, the specific step of the carbon coating treatment includes: the mixture obtained by mixing the active material and the solid-phase carbon source is carbonized to obtain the anode material with a carbon layer on the surface.

In some embodiments, the specific step of the carbon coating treatment includes: the mixture obtained by mixing the active material and the solid-phase carbon source is carbonized to obtain the anode material with a carbon layer on the surface. The temperature of the carbonization treatment is 500°C to 1000°C, and the time of the carbonization treatment is 30 minutes to 24 hours.

The temperature of the carbonization treatment may specifically be 500°C, 540°C, 580°C, 600°C, 620°C, 650°C, 680°C, 700°C, 760°C, 870°C, 900°C, 920°C, 950°C, 980 °C, or 1000°C, etc., which is not limited herein. The time of the carbonization treatment may specifically be 30min, 1h, 3h, 5h, 8h, 12h, 15h, 18h, 20h, 22h, or 24h, etc., which is not limited herein.

In some embodiments, the specific step of the carbon coating treatment includes: the mixture obtained by mixing the active material and the solid-phase carbon source is carbonized to obtain the anode material with a carbon layer on the surface. The solid-phase carbon source includes at least one of sugars, esters, hydrocarbons, organic acids, and high molecular polymers.

In some embodiments, the specific step of the carbon coating treatment includes: the mixture obtained by mixing the active material and the solid-phase carbon source is carbonized to obtain the anode material with a carbon layer on the surface. The solid-phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfuryl resin, epoxy resin and phenolic resin.

In some embodiments, the specific step of the carbon coating treatment includes: the mixture obtained by mixing the active material and the solid-phase carbon source is carbonized to obtain the anode material with a carbon layer on the surface. A mass ratio of the solid-phase carbon source to the anode material is (1-200): 100, which may specifically be 1:100, 2:100, 5:100, 10:100, 50:100, 100:100, 150:100, 180:100, or 200:100, etc., which is not limited herein.

In some embodiments, the specific step of the carbon coating treatment includes: the mixture obtained by mixing the active material and the liquid-phase carbon source is carbonized to obtain the anode material with a carbon coating layer on the surface.

In some embodiments, the specific step of the carbon coating treatment includes: the mixture obtained by mixing the active material and the liquid-phase carbon source is carbonized to obtain the anode material with a carbon layer on the surface. A mass ratio of the liquid-phase carbon source to the anode material is (1-200):100, which may specifically be 1:100, 2:100, 5:100, 10:100, 50:100, 100:100, 150:100, 180:100, or 200:100, etc., which is not limited herein.

In some embodiments, the specific step of the carbon coating treatment includes: the mixture obtained by mixing the active material and the liquid-phase carbon source is carbonized to obtain the anode material with a carbon layer on the surface. The liquid-phase carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate and amyl acetate.

In some embodiments, the specific step of the carbon coating treatment includes: the mixture obtained by mixing the active material and the liquid-phase carbon source is carbonized to obtain the anode material with a carbon layer on the surface. The temperature of the carbonization treatment is 600°C to 1200°C, and the time of the carbonization treatment is 2 hours to 20 hours.

The temperature of the carbonization treatment may specifically be 600°C, 620°C, 650°C, 680°C, 700°C, 760°C, 870°C, 900°C, 920°C, 950°C, 980°C, 1000°C, 1020°C, 1080°C, 1100°C, 1160°C, or 1200°C, etc., which is not limited herein. The time of the carbonization treatment may specifically be 2h, 3h, 5h, 8h, 12h, 15h, 18h, 20h, 22h, 24h, 25h, 26h, 28h, or 30h, etc., which is not limited herein.

In some embodiments, the carbon coating treatment is performed under a protective atmosphere that includes at least one of nitrogen, helium, neon, argon, and krypton.

In some embodiments, the method further includes: the product of the carbon coating treatment is subjected to shaping, screening and grading to obtain the anode material with a carbon layer on the surface. The shaping process includes at least one of crushing, grinding, ball milling, and gas crushing.

According a fourth aspect, the present disclosure provides a preparation method of the anode material, including the following steps:

Step S100, the carbon matrix with pores is provided.
Step S200, the vapor deposition is performed on the carbon matrix using the silicon source gas to obtain the active material. The anode material includes the active material, the average particle size of the carbon matrix is D$\mu$m, the average pore diameter of the carbon matrix is Vnm, the volume concentration ratio of the silicon source gas is H, the flow rate of the silicon source gas is NL/min, the deposition time of the vapor deposition is T hours, and the deposition relationship is controlled to satisfy $T*D^{1/2}=\alpha*V^2*N*H$, where $\alpha$ represents a deposition coefficient, and $0.1\leq\alpha\leq1$.

According to the preparation method of the anode material provided by the present disclosure, the silicon particles are uniformly filled in the pores of the carbon matrix using a vapor deposition process to prepare the anode material. The deposition of the silicon particles on the surface of the carbon matrix can be reduced by controlling deposition conditions, and the silicon particles are effectively filled in the pores of the carbon matrix, improving the capacity of the anode material. Meanwhile, the size and shape of the silicon particles can be controlled to ensure that the anode material not only can relieve volume expansion but also can maintain structural stability during cycling, reducing the collapse of the material structure caused by volume expansion of the anode material during the lithium intercalation and de-intercalation process, and effectively reducing the occurrence of side reactions between the anode material and the electrolyte, thereby improving the cycling performance of the anode material.

Step S100, the carbon matrix with pores is provided.

It should be noted that, the carbon matrix with pores in the present disclosure may be directly purchased and used, or may be prepared by carbonizing a carbon source, which is not limited herein.

In some embodiments, the step of providing the carbon matrix with pores includes: after the carbon source is carbonized, the product of the carbonization treatment is acidified and activated to obtain the carbon matrix with pores.

In some embodiments, the carbon source includes at least one of bamboo charcoal, coconut shells, resin, starch, and husks.

In some embodiments, the step of acidifying the product of the carbonization treatment includes: the product of the carbonization treatment is placed in an acid solution with a concentration of 0.5mol/L to 15mol/L for 0.5 hours to 20 hours.

The concentration of the acid solution may specifically be 0.5mol/L, 1mol/L, 3mol/L, 5mol/L, 7mol/L, 9mol/L, 10mol/L, 12mol/L, 14mol/L, or 15mol/L, etc., which is not limited herein.

The time for placing the product of the carbonization treatment in the acid solution may specifically be 0.5h, 0.8h, 1h, 2h, 3h, 5h, 8h, 12h, 15h, 18h, or 20h, etc., which is not limited herein.

In some embodiments, the step of pickling the product of the carbonization treatment includes: the product of the carbonization treatment is placed in an acid solution with a concentration of 0.5mol/L to 15mol/L for 0.5 hours to 20 hours. The acid solution includes at least one of hydrochloric acid, nitric acid, sulfuric acid, carbonic acid, acetic acid, benzoic acid, hydrofluoric acid, oxalic acid, phosphoric acid and carboxylic acid.

In some embodiments, the step of activating the product of the carbonization treatment includes: the product of the carbonization treatment after acid pickling is dried and then placed in a mixed gas of nitrogen and water vapor for activation treatment. It can be understood that the acid pickling and activation treatment are conducive to the directional deposition of silicon particles into the pores of the carbon matrix during the subsequent silicon deposition process, thereby reducing the deposition of silicon particles on the surface of the carbon matrix.

In some embodiments, the step of activating the product of the carbonization treatment includes: the product of the carbonization treatment after acid pickling is dried and then placed in a mixed gas of nitrogen and water vapor for activation treatment. The concentration of the water vapor is 0.5% to 30%. The concentration of the water vapor may specifically be 0.5%, 1%, 3%, 5%, 8%, 10%, 12%, 15%, 18%, 20%, 22%, 25%, or 30%, etc., which is not limited herein.

In some embodiments, the step of activating the product of the carbonization treatment includes: the product of the carbonization treatment after acid pickling is dried and then placed in a mixed gas of nitrogen and water vapor for activation treatment. The temperature of the activation treatment is 380°C to 2000°C, and the time of the activation treatment is 0.5 hours to 30 hours.

The temperature of the activation treatment may specifically be 380°C, 400°C, 500°C, 800°C, 1000°C, 1200°C, 1500°C, 1800°C, or 2000°C, etc., which is not limited herein. The time of the activation treatment may specifically be 0.5h, 1h, 3h, 5h, 8h, 10h, 12h, 15h, 18h, 24h, or 30h, etc., which is not limited herein.

In some embodiments, the temperature of the carbonization treatment is 400°C to 2000°C, and the time of the carbonization treatment is 3 hours to 30 hours.

The temperature of the carbonization treatment may specifically be 400°C, 500°C, 600°C, 800°C, 1000°C, 1200°C, 1500°C, 1800°C, or 2000°C, etc., which is not limited herein. The time of the carbonization treatment may specifically be 3h, 5h, 8h, 12h, 15h, 18h, 24h, 28h, or 30h, etc., which is not limited herein.

Step S200, the vapor deposition is performed on the carbon matrix using the silicon source gas to obtain the active material. The anode material includes the active material, the average particle size of the carbon matrix is $D\mu m$, the average pore diameter of the carbon matrix is Vnm, the volume concentration ratio of the silicon source gas is H, the flow rate of the silicon source gas is NL/min, the deposition time of the vapor deposition is T hours, and the deposition relationship is controlled to satisfy $T*D^{1/2}=\alpha*V^2*N*H$, where $\alpha$ represents a deposition coefficient, and $0.1\leq\alpha\leq1$.

A value of $\alpha$ may specifically be 0.1, 0.3, 0.5, 0.65, 0.7, 0.78, 0.89, 0.92, 0.98, or 1, etc., which is not limited herein.

In some embodiments, the silicon source gas includes at least one of methylsilane, ethylsilane, monochlorosilane, and dichlorosilane.

In some embodiments, the average particle size of the carbon matrix is $1\mu m$ to $15\mu m$, which may specifically be $1\mu m$, $3\mu m$, $5\mu m$, $8\mu m$, $10\mu m$, $11\mu m$, $12\mu m$, $13\mu m$, $14\mu m$, or $15\mu m$, etc., or may be another value within the above range, which is not limited herein.

In some embodiments, the average pore diameter of the carbon matrix is 0.1 nm to 5nm, which may specifically be 0.1nm, 0.5nm, 1nm, 1.5nm, 2nm, 3nm, 3.7nm, 4nm, 4.5nm, 4.8nm, or 5nm, etc., but is not limited to the recited values, and other unrecited values within the numerical range are also applicable.

In some embodiments, the volume concentration ratio of the silicon source gas is 1% to 90%, which may specifically be 1%, 5%, 10%, 15%, 20%, 30%, 40%, 50%, 60%, 70%, 80%, or 90%, etc., or may be another value within the above range, which is not limited herein.

In some embodiments, the flow rate of the silicon source gas is 0.5L/min to 100L/min, which may specifically be 0.5L/min, 1L/min, 5L/min, 10L/min, 20L/min, 30L/min, 50L/min, 70L/min, 85L/min, 95L/min, or 100L/min, etc., or may be another value within the above range, which is not limited herein.

In some embodiments, the deposition time of the vapor deposition is 0.1h to 15h, which may specifically be 0.1h, 0.5h, 1h, 3h, 5h, 8h, 10h, 12h, 13h, 14h, or 15h, etc., which is not limited herein.

In some embodiments, the deposition temperature of the vapor deposition is 300°C to 800°C, which may specifically be 300°C, 400°C, 500°C, 600°C, 650°C, 700°C, 750°C, or 800°C, etc., but is not limited to the recited values, and other unrecited values within the numerical range are also applicable.

In some embodiments, the method further includes: the active material is performed the carbon coating treatment to obtain an anode material with a carbon layer on the surface. The carbon coating treatment includes at least one of solid-phase carbon coating, liquid-phase carbon coating and gas-phase carbon coating.

In some embodiments, the specific step of the carbon coating treatment includes: after the active material is heated, a protective gas and a carbon source gas are introduced, and the carbon source gas is thermally cracked to obtain the anode material with a carbon layer on the surface.

In some embodiments, the specific step of the carbon coating treatment includes: after the active material is heated, a protective gas and a carbon source gas are introduced, and the carbon source gas is thermally cracked to obtain the anode material with a carbon layer on the surface. The carbon source gas is a hydrocarbon.

In some embodiments, the specific step of the carbon coating treatment includes: after the active material is heated, a protective gas and a carbon source gas are introduced, and the carbon source gas is thermally cracked to obtain the anode material with a carbon layer on the surface. The carbon source gas includes at least one of methane, ethylene, acetylene, propyne, propylene, propane, toluene, benzene, styrene and phenol.

In some embodiments, the specific step of the carbon coating treatment includes: after the active material is heated, a protective gas and a carbon source gas are introduced, and the carbon source gas is thermally cracked to obtain the anode material with a carbon layer on the surface. The temperature of the thermal cracking is 600°C to 1000°C, and the time of the thermal cracking is 30 minutes to 24 hours.

The temperature of thermal cracking may specifically be 600°C, 650°C, 680°C, 700°C, 780°C, 800°C, 900°C, 960°C or 1000°C, etc., and the time of thermal cracking may specifically be 30min, 1h, 3h, 5h, 8h, 10h, 12h, 15h, 18h, or 24h, etc., which is not limited herein.

In some embodiments, the specific step of the carbon coating treatment includes: the mixture obtained by mixing the active material and the solid-phase carbon source is carbonized to obtain the anode material with a carbon layer on the surface.

In some embodiments, the specific step of the carbon coating treatment includes: the mixture obtained by mixing the active material and the solid-phase carbon source is carbonized to obtain the anode material with a carbon layer on the surface. The temperature of the carbonization treatment is 500°C to 1000°C, and the time of the carbonization treatment is 30 minutes to 24 hours.

The temperature of the carbonization treatment may specifically be 600°C, 650°C, 680°C, 700°C, 780°C, 800°C, 900°C, 960°C, or 1000°C, etc., which is not limited herein. The time of the carbonization treatment may specifically be 30min, 1h, 3h, 5h, 8h, 10h, 12h, 15h, 18h, or 24h, etc., which is not limited herein.

In some embodiments, the specific step of the carbon coating treatment includes: the mixture obtained by mixing the active material and the solid-phase carbon source is carbonized to obtain the anode material with a carbon layer on the surface. The solid-phase carbon source includes at least one of sugars, esters, hydrocarbons, organic acids, and high molecular polymers.

In some embodiments, the specific step of the carbon coating treatment includes: the mixture obtained by mixing the active material and the solid-phase carbon source is carbonized to obtain the anode material with a carbon layer on the surface. The solid-phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfuryl resin, epoxy resin and phenolic resin.

In some embodiments, the specific step of the carbon coating treatment includes: the mixture obtained by mixing the active material and the solid-phase carbon source is carbonized to obtain the anode material with a carbon layer on the surface. The mass ratio of the solid-phase carbon source to the active material is (1-50):(20-100), which may specifically be 1:99, 10:90, 20:80, 30:70, or 50:50, etc., which is not limited herein.

In some embodiments, the specific step of the carbon coating treatment includes: the mixture obtained by mixing the active material and the liquid-phase carbon source is carbonized to obtain the anode material with a carbon coating layer on the surface.

In some embodiments, the specific step of the carbon coating treatment includes: the mixture obtained by mixing the active material and the liquid-phase carbon source is carbonized to obtain the anode material with a carbon layer on the surface. The mass ratio of the liquid-phase carbon source to the active material is (1-50):(20-100), which may specifically be 1:99, 10:90, 20:80, 30:70, or 50:50, etc., which is not limited herein.

In some embodiments, the specific step of the carbon coating treatment includes: the mixture obtained by mixing the active material and the liquid-phase carbon source is carbonized to obtain the anode material with a carbon layer on the surface. The liquid-phase carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate and amyl acetate.

In some embodiments, the specific step of the carbon coating treatment includes: the mixture obtained by mixing the active material and the liquid-phase carbon source is carbonized to obtain the anode material with a carbon layer on the surface. The temperature of the carbonization treatment is 600°C to 1200°C, and the time of the carbonization treatment is 2 hours to 20 hours.

The temperature of the carbonization treatment may specifically be 600°C, 650°C, 700°C, 800°C, 900°C, 1000°C, or 1200°C, etc., which is not limited herein.

The time of the carbonization treatment may specifically be 2h, 5h, 8h, 10h, 12h, 15h, 18h, or 20h, etc., which is not limited herein.

In some embodiments, the carbon coating treatment is performed under a protective atmosphere that includes at least one of nitrogen, helium, neon, argon, and krypton.

In some embodiments, the method further includes: the product of the carbon coating treatment is subjected to shaping, screening and grading to obtain the anode material with a carbon layer on the surface. The shaping process includes at least one of crushing, grinding, ball milling, and gas crushing.

According to a fifth aspect, the present disclosure provides a lithium ion battery. The lithium ion battery includes the anode material according to the first aspect or the anode material prepared by the preparation method of the anode material according to the second aspect.

The anode material of the first aspect and the anode material of the second aspect of the present disclosure are further described below in various examples and comparative examples. The examples of the present disclosure are not limited to the following specific examples. Variations may be made as appropriate within the scope of the independent claims.

Test Methods:

(1) Method for testing the specific surface area of the anode material:

The specific surface area was measured using an American Micrometrics TriStar 3000 BET surface area and pore size analyzer.

(2) Method for testing the total pore volume of the anode material or the carbon matrix:

The pore volume V was measured using a Micrometrics ASAP 2460 analyzer, and calculated in a pore diameter range of 17Å to 3000Å using a BJH Desortation cumulative volume of pores model.

Microporous and mesoporous analysis were performed using Micromeritics ASAP 2460. At liquid nitrogen temperatures, the equilibrium adsorption amount of nitrogen on the surface of an object was related to its pore diameter and other characteristics. Combined with the pattern of adsorption as the adsorption amount changed with relative pressure, various models were fitted to calculate the pore diameter. The report generated by the software used a density functional theory (DFT) method to calculate the pore diameter distribution, total pore volume, and pore volume in specific ranges.

(3) Method for testing the pore diameter of the anode material or the carbon matrix:

An appropriate amount of sample particles were taken and measured using a transmission electron microscope (TEM) to determine the pore diameter and porosity of the pores.

(4) Method for testing the particle size of the silicon particles:

Silicon nano-particles were observed using a field emission scanning electron microscope or a transmission electron microscope, and the particle sizes of 5-10 silicon nano-particles were directly measured using a scale. The average value of the particle sizes was taken as the final particle size of the silicon nano-particles.

(5) Method for testing the particle size of the anode material:

The particle size distribution was measured using a Malvern laser particle size analyzer MS3000. The intensity of scattered light at different angles depends on the size of the particles, with larger particles scattering at smaller angles and smaller particles scattering at larger angles. By utilizing laser diffraction and the intensity distribution, the particle size distribution was obtained.

(6) Calculation method for half-peak width

The half-peak width (FWHM) was defined as FWHM=2[(Xp-Xl)+(XP-Xr)], where Xp represents the position of the peak top of the curve, and Xl and Xr represent the peak values corresponding to the curve ranges, respectively (for example, 200mV-350mV corresponds to peak strengths at 200mV and 350mV).

(7) Electrochemical performance test:

The electrochemical cycling performance was tested as follows: the anode material prepared in Examples 1 to 8 and Comparative Examples 1 to 3, along with a conductive agent and a binder, were dissolved in a solvent at a mass percentage of 94: 1: 5, and the solid content was controlled to be 50%. This mixture was coated on a copper foil current collector, vacuum-dried, and prepared into an anode pole piece. A ternary positive electrode pole piece prepared by a conventional mature process, 1mol/L lithium hexafluorophosphate LiPF6 / (ethylene carbonate EC + dimethyl carbonate DMC + ethyl methyl carbonate EMC) (v/v=1:1:1) electrolyte, a Celgard2400 separator and a shell were assembled into an 18650-cylinder single battery by a conventional production process. The charging and discharging test of the cylindrical battery was conducted on a LAND battery test system of Wuhan Kono Electronics Co., Ltd., under normal temperature condition. The constant current charge and discharge rate was 0.2 C, with voltage limits set between 2.75V and 4.2V. A first reversible capacity, a first cycle charge capacity, and a first cycle discharge capacity were obtained. The first Coulombic efficiency was calculated as the ratio of the first cycle discharge capacity to the first cycle charge capacity.

After the cycling was repeated for 50 times, a thickness H1 of the pole piece of the lithium ion battery was measured using a micrometer, and the expansion rate after 50 cycles was calculated as (H1-H0)/H0×100%.

After the cycling was repeated for 50 times, the discharge capacity was recorded as the remaining capacity of the lithium ion battery, and the capacity retention was calculated as the remaining capacity/the initial capacity×100%.

**Performance Test of the Anode material of the First Aspect:**

Example 1

(1) The husks were carbonized at 500°C for 5 hours. The product of the carbonization treatment was then acid-washed with 5mol/L hydrochloric acid for 4 hours. After drying, the product was placed in a heat treatment furnace where a mixed gas of water vapor and nitrogen (volume ratio 1:80) was introduced for activation at 800°C for 12 hours to obtain a carbon matrix with an average pore diameter of 2.1nm.

(2) The carbon matrix was placed in chemical vapor deposition (CVD) device, and silane was introduced into the CVD device at a rate of 18L/min. The volume concentration ratio of the silane was controlled at 20%. The temperature was then raised to 500°C, and a vapor deposition reaction was performed for 4 hours to obtain the active material.

(3) The active material was mixed with the phenolic resin at a mass ratio of 50:15. The mixture was then placed in a high-temperature box furnace, and nitrogen was introduced. The mixture was performed the heat treatment at 720°C for 2 hours.

(4) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 2.3nm. The specific surface area of the anode material is 2.9m$^2$/g, and the median particle size of the anode material is 10μm.

In this example, the K value of the vapor deposition is 3.35.

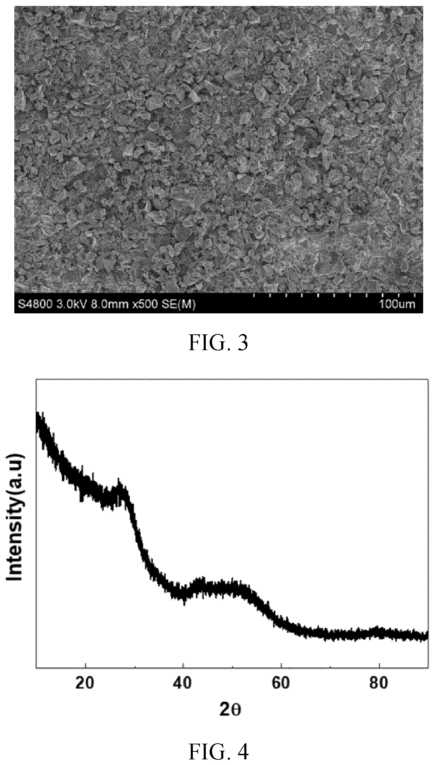

FIG. 3 shows a scanning electron microscope (SEM) image of an anode material prepared in Example 1 of the present disclosure.

FIG. 4 shows an XRD pattern of the anode material prepared in Example 1 of the present disclosure. As shown in FIG. 4, the silicon particles in the anode material are in an amorphous state.

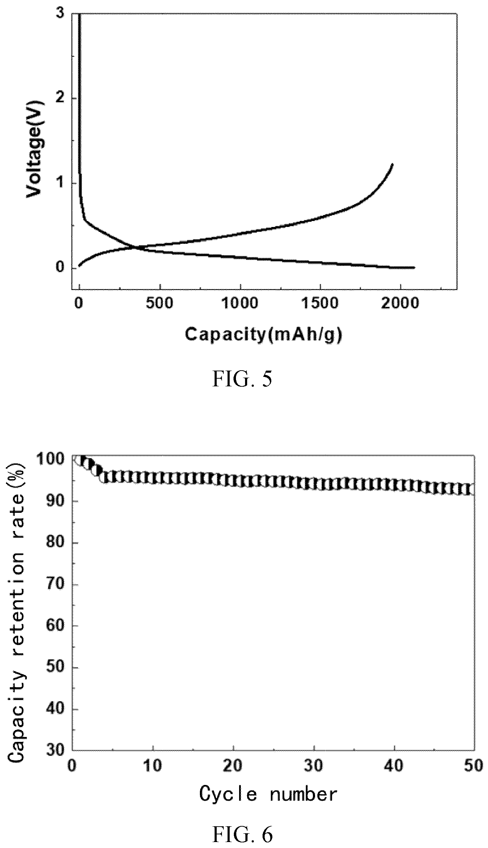

FIG. 5 shows a first charge-discharge curve of the anode material prepared in Example 1 of the present disclosure. As shown in FIG. 5, the first charge and discharge capacity of the anode material is 1955mAh/g, and the first efficiency is 92.9%.

FIG. 6 shows a cycling performance curve of the anode material prepared in Example 1 of the present disclosure. As shown in FIG. 6, the anode material has excellent cycling performance, with the capacity retention rate of 92.6% after 50 cycles.

Example 2

(1) A commercial carbon matrix with an average pore diameter of 1.6nm was placed in chemical vapor deposition (CVD) device, and silane was introduced into the CVD device at a rate of 19L/min. The volume concentration ratio of the silane was controlled at 40%. The temperature was then raised to 600°C, and a vapor deposition reaction was performed for 3 hours to obtain the active material.

(2) The active material was mixed with the sucrose at a mass ratio of 50:45. The mixture was then placed in a high-temperature box furnace, and nitrogen was introduced. The mixture was performed the heat treatment at 620°C for 2 hours.

(3) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 1.8nm. The specific surface area of the anode material is 3.4m$^2$/g, and the median particle size of the anode material is 8.2$\mu$m.

In this example, the K value of the vapor deposition is 4.47.

Example 3

(1) The starch was carbonized at 600°C for 8 hours. The product of the carbonization treatment was then acid-washed with 3mol/L hydrochloric acid for 7 hours. After drying, the product was placed in a heat treatment furnace where a mixed gas of water vapor and nitrogen (volume ratio 3:80) was introduced for activation at 900°C for 12 hours to obtain a carbon matrix with an average pore diameter of 1.8nm.

(2) The carbon matrix was placed in chemical vapor deposition (CVD) device, and silane was introduced into the CVD device at a rate of 16L/min. The volume concentration ratio of the silane was controlled at 25%. The temperature was then raised to 700°C, and a vapor deposition reaction was performed for 2.5 hours to obtain the active material.

(3) The active material was mixed with the epoxy resin at a mass ratio of 50:45. The mixture was then placed in a high-temperature box furnace, and nitrogen was introduced. The mixture was performed the heat treatment at 650°C for 2 hours.

(4) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 2.0nm. The specific surface area of the anode material is 3.8m$^2$/g, and the median particle size of the anode material is 5.9$\mu$m.

In this example, the K value of the vapor deposition is 3.22.

Example 4

(1) A commercial carbon matrix with an average pore diameter of 1.3nm was placed in chemical vapor deposition (CVD) device, and silane was introduced into the CVD device at a rate of 21L/min. The volume concentration ratio of the silane was controlled at 50%. The temperature was then raised to 500°C, and a vapor deposition reaction was performed for 4 hours to obtain the active material.

(2) The active material was mixed with the phenolic resin at a mass ratio of 30:45. The mixture was then placed in a high-temperature box furnace, and nitrogen was introduced. The mixture was performed the heat treatment at 820°C for 4 hours.

(3) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 1.6nm. The specific surface area of the anode material is 2.4m$^2$/g, and the median particle size of the anode material is 7.4$\mu$m.

In this example, the K value of the vapor deposition is 2.71.

Example 5

Different from Example 4:

(1) A commercial carbon matrix with an average pore diameter of 1.3nm was placed in chemical vapor deposition (CVD) device, and silane was introduced into the CVD device at a rate of 21L/min. The volume concentration ratio of the silane was controlled at 80%. The temperature was then raised to 500°C, and a vapor deposition reaction was performed for 4 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 3.5nm. The specific surface area of the anode material is 2.1m$^2$/g, and the median particle size of the anode material is 8.2$\mu$m.

In this example, the K value of the vapor deposition is 4.3.

Example 6

Different from Example 4:

(1) A commercial carbon matrix with an average pore diameter of 1.3nm was placed in chemical vapor deposition (CVD) device, and silane was introduced into the CVD device at a rate of 100L/min. The volume concentration ratio of the silane was controlled at 5%. The temperature was then raised to 500°C, and a vapor deposition reaction was performed for 6 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 3.5nm. The specific surface area of the anode material is 2.1m$^2$/g, and the median particle size of the anode material is 8.2$\mu$m.

In this example, the K value of the vapor deposition is 2.73.

Example 7

Different from Example 1:

(2) The carbon matrix was placed in chemical vapor deposition (CVD) device, and silane was introduced into the CVD device at a rate of 18L/min. The volume concentration ratio of the silane was controlled at 20%. The temperature was then raised to 800°C, and a vapor deposition reaction was performed for 4 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 5.5nm. The specific surface area of the anode material is 2.8m$^2$/g, and the median particle size of the anode material is 9.8$\mu$m.

In this example, the K value of the vapor deposition is 1.66.

Example 8

Different from Example 1:

(2) The carbon matrix was placed in chemical vapor deposition (CVD) device, and silane was introduced into the CVD device at a rate of 18L/min. The volume concentration ratio of the silane was controlled at 20%. The temperature was then raised to 600°C, and a vapor deposition reaction was performed for 6 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 5.5nm. The specific surface area of the anode material is 2.8m$^2$/g, and the median particle size of the anode material is 9.8$\mu$m.

In this example, the K value of the vapor deposition is 1.1.

Comparative Example 1

Different from Example 1 in that:

(2) The carbon matrix was placed in chemical vapor deposition (CVD) device, and silane was introduced into the CVD device at a rate of 34L/min. The volume concentration ratio of the silane was controlled at 22%. The temperature was then raised to 500°C, and a vapor deposition reaction was performed for 4 hours to obtain the active material.

The anode material prepared in this comparative example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 5.3nm. The specific surface area of the anode material is 3.1m$^2$/g, and the median particle size of the anode material is 9.7$\mu$m.

In this example, the K value of the vapor deposition is 13.16.

Comparative Example 2

Different from Example 1:

(1) The husks were carbonized at 500°C for 5 hours. The product of the carbonization treatment was then acid-washed with 5mol/L hydrochloric acid for 4 hours. After drying, the product was placed in a heat treatment furnace where a mixed gas of water vapor and nitrogen (volume ratio 5:80) was introduced for activation at 1500°C for 12 hours to obtain a carbon matrix with an average pore diameter of 4.5nm.

The anode material prepared in this comparative example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 4.9nm. The specific surface area of the anode material is 2.9m$^2$/g, and the median particle size of the anode material is 10.3$\mu$m.

In this example, the K value of the vapor deposition is 33.

Comparative Example 3

Different from Example 1:

(2) The carbon matrix was placed in chemical vapor deposition (CVD) device, and silane was introduced into the CVD device at a rate of 18L/min. The volume concentration ratio of the silane was controlled at 20%. The temperature was then raised to 900°C, and a vapor deposition reaction was performed for 5 hours to obtain the active material.

The anode material prepared in this comparative example includes an active material that includes a carbon matrix and silicon particles. The carbon matrix has pores, and at least part of the silicon particles are distributed in the pores of the carbon matrix. The carbon matrix is made of porous carbon, and the average particle size of the silicon particles is 5.4nm. The specific surface area of the anode material is 3.3m$^2$/g, and the median particle size of the anode material is 9.8$\mu$m.

In this example, the K value of the vapor deposition is 0.89.

The anode material prepared in Example 1 to Example 8 is the anode material provided in the first aspect of the present disclosure, and the preparation method thereof adopts the preparation method provided in the third aspect of the present disclosure. The test results of the above Examples 1-8 and Comparative Examples 1-3 are shown in Table 1 below.

Table 1: Performance test results of the anode materials in Examples 1-8 and Comparative Examples 1-3

| | K Value | A1 Value | B1 Value | B1/A1 | First Reversible Capacity (mAh/g) | First Coulombic Efficiency (%) | 50-Week Pole Piece Expansion Rate (%) | 50-Cycle Capacity Retention Rate (%) |
|---|---|---|---|---|---|---|---|---|
| Example 1 | 3.35 | 12200 | 19050 | 1.56 | 1955 | 92.9 | 35.2 | 92.6 |
| Example 2 | 4.47 | 11800 | 37850 | 3.2 | 1901 | 92.7 | 34.0 | 92.9 |
| Example 3 | 3.22 | 13500 | 14650 | 1.08 | 2001 | 92.9 | 34.3 | 92.8 |
| Example 4 | 2.71 | 10500 | 25500 | 2.42 | 2033 | 92.8 | 32.8 | 93.1 |
| Example 5 | 4.3 | 11700 | 43200 | 3.69 | 2067 | 93.2 | 37.2 | 91.9 |
| Example 6 | 2.73 | 12040 | 26820 | 2.23 | 2014 | 92.5 | 31.9 | 93.0 |
| Example 7 | 1.66 | 13345 | 52302 | 3.92 | 1995 | 92.5 | 34.9 | 92.0 |
| Example 8 | 1.1 | 11389 | 20997 | 1.84 | 2005 | 92.7 | 33.8 | 92.2 |
| Comparative Example 1 | 13.16 | 14500 | 75500 | 5.20 | 1899 | 91.0 | 43.2 | 88.9 |

(continued)

|  | K Value | A1 Value | B1 Value | B1/A1 | First Reversible Capacity (mAh/g) | First Coulombic Efficiency (%) | 50-Week Pole Piece Expansion Rate (%) | 50-Cycle Capacity Retention Rate (%) |
|---|---|---|---|---|---|---|---|---|
| Comparative Example 2 | 33 | 17200 | 89050 | 5.17 | 1950 | 90.1 | 44.3 | 88.1 |
| Comparative Example 3 | 0.89 | 15200 | 99050 | 6.51 | 1998 | 90.9 | 45.9 | 87.9 |

According to the data in Table 1, the anode material prepared in Examples 1 to 8 are prepared by fully filling the silicon particles in the pores of the carbon matrix using the vapor deposition process. The deposition of the silicon particles on the surface of the carbon matrix can be reduced by controlling deposition conditions, and the silicon particles are effectively filled in the pores of the carbon matrix, improving the capacity of the anode material. Meanwhile, the size and shape of the silicon particles can be controlled to ensure that the anode material not only can relieve volume expansion but also can maintain structural stability during cycling, reducing the collapse of the material structure caused by volume expansion of the anode material during the lithium intercalation and de-intercalation process, and effectively reducing the occurrence of side reactions between the anode material and the electrolyte, thereby improving the cycling performance of the anode material.

According to the test data of Example 1 and Comparative Example 1 in Table 1, it can be seen that, in the preparation process of the anode material of Comparative Example 1, the flow rate V of the silane introduced during the vapor deposition process is relatively high. The loading amount of the silane gas introduced over the same time increase, leading to an increased deposition of silicon particles in the pores of the carbon matrix, resulting in the silicon particles growing larger, which ultimately causes the particle size of the silicon particles in the pores of the carbon matrix to be larger. As a result, the B1 value of the anode material increases, and the B1/A1 ratio deviates from the above range. During cycling, the large particle size of the silicon particles leads to a significant increase in the volume expansion of the anode material, so that the material is pulverized and crushed, and the side reactions between the anode material and the electrolyte is exacerbated, thereby leading to a reduction in the capacity, the first coulombic efficiency and the cycling performance of the anode material.

According to the test data of Example 1 and Comparative Example 2 in Table 1, it can be seen that, in the preparation process of the anode material of Comparative Example 2, the average pore diameter of the porous carbon material is relatively large, resulting in a larger particle size of silicon particles deposited in the pores of the carbon matrix. As a result, the B1 value of the anode material increases, and the B1/A1 ratio deviates from the above range. During cycling, the large particle size of the silicon particles leads to a significant increase in the volume expansion of the anode material, so that the material is pulverized and crushed, and the side reactions between the anode material and the electrolyte is exacerbated, thereby leading to a reduction in the capacity, the first coulombic efficiency and the cycling performance of the anode material.

According to the test data of Example 1 and Comparative Example 3 in Table 1, it can be seen that, in the preparation process of the anode material of Comparative Example 3, the temperature during the vapor deposition is too high, which causes the silicon particles to undergo secondary growth, resulting in the formation of larger silicon particles. Additionally, the silicon particles may be converted from amorphous silicon to crystalline silicon at a high temperature. The lithium intercalation peak position of the crystalline silicon is enhanced, meaning the peak value of the anode material at A1 is enhanced, but at the same time, the peak value of the anode material at B1 becomes even stronger. As a result, the B1/A1 ratio increases, and the B1/A1 ratio deviates from the above range. The increased volume expansion of the anode material leads to the pulverization and crushing of the material, which exacerbates the side reactions between the material and the electrolyte, thereby leading to a reduction in the capacity, the first coulombic efficiency and the cycling performance of the anode material.

**Performance Test of the Anode material of the Second Aspect:**

Example 9

(1) The bamboo charcoal was carbonized at 800°C for 16 hours. The product of the carbonization treatment was then treated with 6mol/L hydrochloric acid for 5 hours. After drying, a mixed gas of water vapor and nitrogen (the concentration of the water vapor was 7.8%) was introduced. The product was heated to 780°C and activated for 24 hours to obtain a carbon matrix with an average pore diameter of 2. 1nm and an average particle size of 10$\mu$m.

(2) The carbon matrix was placed in chemical vapor deposition (CVD) device, and silane was introduced into the CVD device at a rate of 22L/min. The volume concentration ratio of the silane was controlled at 50%. The temperature was then raised to 600°C, and a vapor deposition reaction was performed for 4 hours to obtain the active material.

(3) The active material was mixed with the phenolic resin at a mass ratio of 50:15. The mixture was then placed in a high-temperature box furnace, and nitrogen was introduced. The mixture was performed the heat treatment at 720°C for 2 hours.

(4) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of amorphous silicon. The average particle size of the silicon particles is 2.3nm, the specific surface area of the anode material is 3.4m$^2$/g, and the median particle size of the anode material is 9.8$\mu$m.

In this example, a deposition coefficient $\alpha$ of the vapor deposition is 0.26.

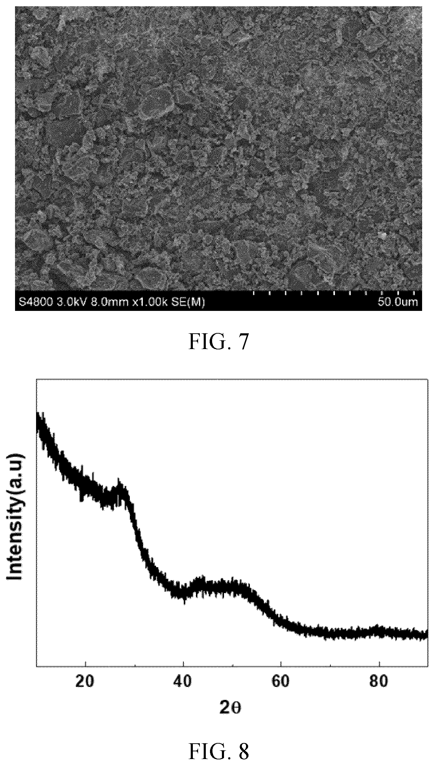

FIG. 7 shows a scanning electron microscope (SEM) image of an anode material prepared in Example 9 of the present disclosure.

FIG. 8 shows an XRD pattern of the anode material prepared in Example 9 of the present disclosure. As shown in FIG. 8, the silicon particles in the anode material are in an amorphous state.

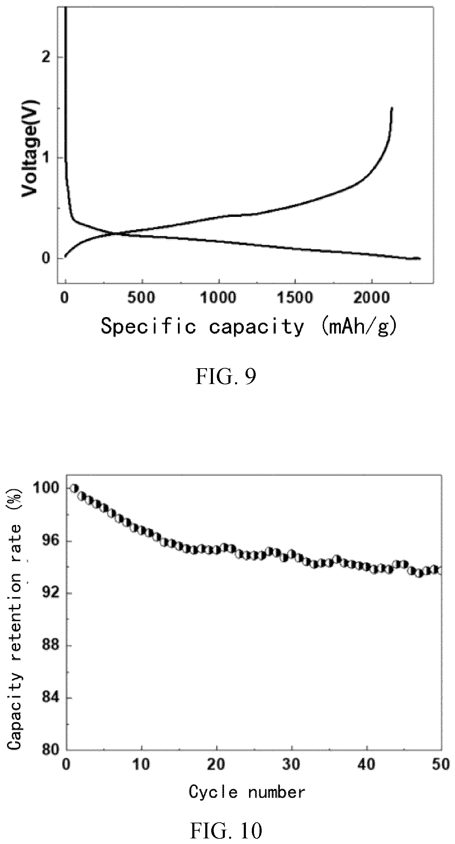

FIG. 9 shows a first charge-discharge curve of the anode material prepared in Example 9 of the present disclosure. As shown in FIG. 9, the first charge and discharge capacity of the anode material is as high as 2098mAh/g, and the first efficiency is also as high as 93.1%.

FIG. 10 shows a cycling performance curve of the anode material prepared by Example 9 of the present disclosure. As shown in FIG. 10, the anode material has excellent cycling performance, with the capacity retention rate of 92.2% after 50 cycles.

Example 10

(1) A commercial carbon matrix with an average pore diameter of 1.9nm and an average particle size of 4$\mu$m was placed in chemical vapor deposition (CVD) device, and silane was introduced into the CVD device at a rate of 9L/min. The volume concentration ratio of the silane was controlled at 60%. The temperature was then raised to 680°C, and a vapor deposition reaction was performed for 5 hours to obtain the active material.

(2) The active material was mixed with the sucrose at a mass ratio of 50:45. The mixture was then placed in a high-temperature box furnace, and nitrogen was introduced. The mixture was performed the heat treatment at 920°C for 2 hours.

(3) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of silicon particles. The average particle size of the silicon particles is 3.0nm, the specific surface area of the anode material is 3.1m$^2$/g, and the median particle size of the anode material is 5.5$\mu$m.

In this example, a deposition coefficient $\alpha$ of the vapor deposition is 0.51.

Example 11

(1) The starch was carbonized at 950°C for 8 hours. The product of the carbonization treatment was then treated with 4.6mol/L hydrochloric acid for 7 hours. After drying, a mixed gas of water vapor and nitrogen (the concentration of the water vapor was 12.6%) was introduced. The product was heated to 980°C and activated for 24 hours to obtain a carbon matrix with an average pore diameter of 1.5nm and an average particle size of 6$\mu$m.

(2) The carbon matrix was placed in chemical vapor deposition (CVD) device, and silane was introduced into the CVD device at a rate of 29L/min. The volume concentration ratio of the silane was controlled at 45%. The temperature was then raised to 700°C, and a vapor deposition reaction was performed for 3 hours to obtain the active material.

(3) The active material was mixed with the epoxy resin at a mass ratio of 50:55. The mixture was then placed in a high-temperature box furnace, and nitrogen was introduced. The mixture was performed the heat treatment at 620°C for 2 hours.

(4) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of amorphous silicon. The average particle size of the silicon particles is 6.7nm, the specific surface area of the anode material is 2.3m$^2$/g, and the median particle size of the anode material is 6.8$\mu$m.

In this example, a deposition coefficient $\alpha$ of the vapor deposition is 0.25.

Example 12

(1) A commercial carbon matrix with an average pore diameter of 3.6nm and an average particle size of 14$\mu$m was placed in chemical vapor deposition (CVD) device, and silane was introduced into the CVD device at a rate of 15L/min. The volume concentration ratio of the silane was controlled at 65%. The temperature was then raised to 700°C, and a vapor deposition reaction was performed for 4 hours to obtain the active material.

(2) The active material was mixed with the phenolic resin at a mass ratio of 30:45. The mixture was then placed in a high-temperature box furnace, and nitrogen was introduced. The mixture was performed the heat treatment at 820°C for 4 hours.

(4) The obtained sample was crushed, screened and then graded to obtain the anode material with a carbon layer on the surface.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of nano-silicon. The average particle size of the silicon particles is 1.9nm, the specific surface area of the anode material is 2.9m$^2$/g, and the median particle size of the anode material is 9.9$\mu$m.

In this example, a deposition coefficient $\alpha$ of the vapor deposition is 0.12.

Example 13

Different from Example 9:

(2) The carbon matrix was placed in chemical vapor deposition (CVD) device, and silane was introduced into the CVD device at a rate of 22L/min. The concentration of the silane was controlled at 50%. The temperature was then raised to 600°C, and a vapor deposition reaction was performed for 6 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of amorphous silicon. The average particle size of the silicon particles is 2.2nm, the specific surface area of the anode material is 2.9m$^2$/g, and the median particle size of the anode material is 10.0$\mu$m.

In this example, a deposition coefficient $\alpha$ of the vapor deposition is 0.39.

Example 14

Different from Example 9:

(2) The carbon matrix was placed in chemical vapor deposition (CVD) device, and silane was introduced into the CVD device at a rate of 22L/min. The concentration of the silane was controlled at 13%. The temperature was then raised to 600°C, and a vapor deposition reaction was performed for 4 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of amorphous silicon. The average particle size of the silicon particles is 2.3nm, the specific surface area of the anode material is 3.2m$^2$/g, and the median particle size of the anode material is 9.8$\mu$m.

In this example, a deposition coefficient $\alpha$ of the vapor deposition is 1.0.

Example 15

Different from Example 12:

(1) A commercial carbon matrix with an average pore diameter of 3.6nm and an average particle size of 14$\mu$m was placed in chemical vapor deposition (CVD) device, and silane was introduced into the CVD device at a rate of 15L/min. The concentration of the silane was controlled at 10%. The temperature was then raised to 700°C, and a vapor deposition reaction was performed for 4 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of nano-silicon. The average particle size of the silicon particles is 3.9nm, the specific surface area of the anode material is 3.0m$^2$/g, and the median particle size of the anode material is 9.6$\mu$m.

In this example, a deposition coefficient $\alpha$ of the vapor deposition is 0.77.

Example 16

Different from Example 12:

(1) A commercial carbon matrix with an average pore diameter of 3.6nm and an average particle size of 14$\mu$m was placed in chemical vapor deposition (CVD) device, and silane was introduced into the CVD device at a rate of 17L/min. The concentration of the silane was controlled at 10%. The temperature was then raised to 700°C, and a vapor deposition reaction was performed for 4 hours to obtain the active material.

The anode material prepared in this example includes an active material that includes a carbon matrix and silicon particles. The carbon matrix has pores, and at least part of the silicon particles are distributed in the pores of the carbon matrix. The carbon matrix is made of porous carbon, and the silicon particles are made of nano-silicon. The average particle size of the silicon particles is 3.84nm, the specific surface area of the anode material is 2.8m$^2$/g, and the median particle size of the anode material is 8.8$\mu$m.

In this example, a deposition coefficient $\alpha$ of the vapor deposition is 0.10.

Comparative Example 4

Different from Example 9:

(2) The carbon matrix was placed in chemical vapor deposition (CVD) device, and silane was introduced into the CVD device at a rate of 22L/min. The concentration of the silane was controlled at 50%. The temperature was then raised to 600°C, and a vapor deposition reaction was performed for 16 hours to obtain the active material.

The anode material prepared in this comparative example includes an active material that includes a carbon matrix and silicon particles. The carbon matrix has pores, and at least part of the silicon particles are distributed in the pores of the carbon matrix. The carbon matrix is made of porous carbon, and the silicon particles are made of nano-silicon. The average particle size of the silicon particles is 3.9nm, the specific surface area of the anode material is 4.4m$^2$/g, and the median particle size of the anode material is 9.4$\mu$m.

In this example, a deposition coefficient $\alpha$ of the vapor deposition is 1.04.

Comparative Example 5

Different from Example 9:

(1) The bamboo charcoal was carbonized at 850°C for 16 hours. The product of the carbonization treatment was then treated with 6mol/L hydrochloric acid for 5 hours. After drying, a mixed gas of water vapor and nitrogen (the concentration of the water vapor was 3.8%) was introduced. The product was heated to 720°C and activated for 16 hours to obtain a carbon matrix with an average pore diameter of 5.8nm and an average particle size of 10$\mu$m.

The anode material prepared in this comparative example includes an active material that includes a carbon matrix and silicon particles. The carbon matrix has pores, and at least part of the silicon particles are distributed in the pores of the carbon matrix. The carbon matrix is made of porous carbon, and the silicon particles are made of nano-silicon. The average particle size of the silicon particles is 6.9nm, the specific surface area of the anode material is 2.3m$^2$/g, and the median particle size of the anode material is 10.7$\mu$m.

In this example, a deposition coefficient $\alpha$ of the vapor deposition is 0.03.

Comparative Example 6

Different from Example 9:

(2) The porous carbon matrix was placed in chemical vapor deposition (CVD) device, and silane was introduced into the CVD device at a rate of 22L/min. The concentration of the silane was controlled at 50%. The temperature was then raised to 850°C, and a vapor deposition reaction was performed for 16 hours to obtain the anode material.

The anode material prepared in this comparative example includes an active material that includes a carbon matrix and silicon particles. The carbon matrix has pores, and at least part of the silicon particles are distributed in the pores of the carbon matrix. The carbon matrix is made of porous carbon, and the silicon particles are made of nano-silicon. The average particle size of the silicon particles is 3.8nm, the specific surface area of the anode material is 3.3m$^2$/g, and the median particle size of the anode material is 10.3$\mu$m.

In this example, a deposition coefficient $\alpha$ of the vapor deposition is 1.04.

The anode material prepared in Example 9 to Example 16 is the anode material provided in the second aspect of the present disclosure, and the preparation method thereof adopts the preparation method provided in the fourth aspect of the present disclosure. The test results of the above Examples 9-16 and Comparative Examples 4-6 are shown in Table 2 below.

Table 2. Performance test results of the anode materials in Examples 9-16 and Comparative Examples 4-6

| | A2 Value | B2 Value | F1 Value | F2 Value | (B2*F2)/(A2*F1) | First Reversible Capacity (mAh/g) | First Coulombic Efficiency (%) | 50-Week Pole Piece Expansion Rate (%) | 50-Cycle Capacity Retention Rate (%) |
|---|---|---|---|---|---|---|---|---|---|
| Example 9 | 7600 | 4050 | 0.19 | 0.08 | 0.22 | 2098 | 93.1 | 32.2 | 92.2 |
| Example 10 | 9800 | 7850 | 0.21 | 0.09 | 0.34 | 1855 | 92.7 | 33.4 | 92.0 |
| Example 11 | 7800 | 6550 | 0.17 | 0.06 | 0.29 | 2165 | 92.9 | 33.5 | 92.1 |
| Example 12 | 6700 | 3510 | 0.16 | 0.05 | 0.16 | 2094 | 92.5 | 31.9 | 93.5 |
| Example 13 | 7530 | 4130 | 0.15 | 0.07 | 0.25 | 2018 | 92.4 | 32.9 | 92.4 |
| Example 14 | 7100 | 3950 | 0.20 | 0.06 5 | 0.18 | 2098 | 93.1 | 32.2 | 92.2 |
| Example 15 | 6900 | 3660 | 0.23 | 0.06 | 0.14 | 2013 | 92.1 | 31.0 | 93.1 |
| Example 16 | 7140 | 3810 | 0.19 | 0.07 | 0.19 | 2004 | 92.6 | 31.6 | 92.8 |
| Comparative Example 4 | 7700 | 7090 | 0.18 | 0.1 | 0.51 | 1811 | 88.2 | 43.1 | 85.9 |
| Comparative Example 5 | 7600 | 6350 | 0.19 | 0.08 | 0.352 | 1955 | 90.1 | 41.3 | 86.2 |

(continued)

| | A2 Value | B2 Value | F1 Value | F2 Value | (B2*F2)/(A2*F1) | First Reversible Capacity (mAh/g) | First Coulombic Efficiency (%) | 50-Week Pole Piece Expansion Rate (%) | 50-Cycle Capacity Retention Rate (%) |
|---|---|---|---|---|---|---|---|---|---|
| Comparative Example 6 | 6890 | 1035 0 | 0.14 | 0.09 | 0.96 | 2001 | 89.9 | 46.1 | 80.1 |

According to the data in Table 2, the anode material prepared in Examples 9 to 16 are prepared by uniformly filling the silicon particles in the pores of the carbon matrix using the vapor deposition process. The deposition of the silicon particles on the surface of the carbon matrix can be reduced by controlling deposition conditions, and the silicon particles are effectively filled in the pores of the carbon matrix, improving the capacity of the anode material. Meanwhile, the size and shape of the silicon particles can be controlled to ensure that the anode material not only can relieve volume expansion but also can maintain structural stability during cycling, reducing the collapse of the material structure caused by volume expansion of the anode material during the lithium intercalation and de-intercalation process, and effectively reducing the occurrence of side reactions between the anode material and the electrolyte, thereby improving the cycling performance of the anode material.

Compared with Example 9, in the preparation process of the anode material of Comparative Example 4, the time of the vapor deposition is too long, resulting in a larger particle size of silicon particles. Meanwhile, the silicon particles deposited on the surface of the carbon matrix are increased, resulting in a peak value B2 of the potential V between 380mV and 470mV becoming stronger, thereby leading to an increase in the value of (B2*F2)/(A2*F 1). Most of the silicon particles are deposited on the surface of the carbon matrix rather than in the pores, resulting in fewer and unevenly distributed silicon particles within the pores, leading to an increase in the volume expansion of the anode material, a significant increase in the expansion rate of the pole piece, and a deterioration in the cycling performance of the anode material.

Compared with Example 9, in the preparation process of the anode material of Comparative Example 5, the average pore diameter of the carbon matrix is larger, resulting in a larger particle size of silicon particles deposited in the pores of the carbon matrix, and leading to an intensified peak B2 at the position of 380mV to 470mV, thereby resulting in increased value of (B2*F2)/(A2*F1). The larger particle size of silicon particles deposited in the pores results in significantly increased expansion rate of the pole piece, which leads to a decline in the structural stability of the anode material and intensifies the side reactions with the electrolyte, thereby worsening the cycling performance of the anode material.

Compared with Example 9, in the preparation process of the anode material of Comparative Example 6, the temperature during the vapor deposition is too high, causing the silicon particles to undergo secondary growth, and forming larger silicon particles. The silicon particles may be converted from amorphous silicon to crystalline silicon at a high temperature, resulting in a peak value B2 at a position of 380mV to 470mV becoming stronger, thereby leading to a significant increase in the value of (B2*F2)/(A2*F1). The silicon particles are difficult to deposit in the pores of the carbon matrix, and the silicon particles deposited on the surface of the carbon matrix are significantly increased, resulting in a significant increase in the volume expansion of the anode material, a sharp increase in the pole piece expansion rate, and a greater tendency for collapse of the material structure during the lithium intercalation process, which intensified the side reactions between the anode material and the electrolyte, thereby significantly deteriorating the cycling performance of the anode material.

**Claims**

1.    An anode material, comprising an active material, wherein the active material comprises a carbon matrix and silicon particles, the carbon matrix has pores, and at least part of the silicon particles are distributed in the pores of the carbon matrix;

an anode prepared from the anode material acts as a working electrode, a metal lithium acts as a reference electrode, the metal lithium acts as a counter electrode, and an electrolyte contains metal lithium ions, wherein the working electrode, the reference electrode, the counter electrode and the electrolyte form a three-electrode battery to perform charging and discharging, and
when the anode material is electrified in a de-intercalation direction, a graph of a relationship between a differential value dQ/dV and a potential V of the working electrode is obtained,

wherein the differential value dQ/dV is obtained by differentiating the potential V of the working electrode based on the reference electrode to a charge and discharge capacity Q; and

in the graph of the relationship between the differential value dQ/dV and the potential V, the differential value dQ/dV between 20mV and 80mV of the potential V has a maximum peak value A1, and the differential value dQ/dV between 120mV and 210mV of the potential V has a maximum peak value B1, where B1/A1≤4.

2. The anode material according to claim 1, wherein the anode material has a porosity ranging from 40% to 60% after removing the silicon particles.

3. The anode material according to claim 1, wherein the anode material has a total pore volume ranging from $0.001cm^3/g$ to $0.1cm^3/g$.

4. An anode material, comprising an active material, wherein the active material comprises a carbon matrix and silicon particles, the carbon matrix has pores, and at least part of the silicon particles are distributed in the pores of the carbon matrix;

an anode prepared from the anode material acts as a working electrode, a metal lithium acts as a reference electrode, the metal lithium acts as a counter electrode, and an electrolyte contains metal lithium ions, wherein the working electrode, the reference electrode, the counter electrode and the electrolyte form a three-electrode battery to perform charging and discharging, and

when the anode material is electrified in a de-intercalation direction, a graph of a relationship between a differential value dQ/dV and a potential V of the working electrode is obtained,

wherein the differential value dQ/dV is obtained by differentiating a potential V of the working electrode based on the reference electrode to a charge and discharge capacity Q; and

in the graph of the relationship between the differential value dQ/dV and the potential V, the differential value dQ/dV between 200mV and 350mV of the potential V has a maximum peak value A2, with a half-peak width F1, and the differential value dQ/dV between 380mV and 470mV of the potential V has a maximum peak value B2, with a half-peak width F2, where A2>B2, and a following relationship is satisfied: (B2*F2)/(A2*F1)≤0.35.

5. The anode material according to any one of claims 1 to 4, wherein the carbon matrix comprises at least one of hard carbon, soft carbon, graphite, mesocarbon microbeads, activated carbon, porous carbon, mesoporous carbon, or carbon gel.

6. The anode material according to any one of claims 1 to 4, wherein the anode material has at least one of following technical features:

(1) the anode material has a total pore volume greater than or equal to 0.4 $cm^3/g$ after removing the silicon particles;

(2) the anode material are provided with pores after removing the silicon particles, wherein the pores comprise micropores, and a volume ratio of the micropores in a total pore volume of the anode material is greater than or equal to 80%; and

(3) an average pore diameter of pores formed after removing the silicon particles from the anode material is less than or equal to 5nm.

7. The anode material according to any one of claims 1 to 4, wherein the silicon particles comprise at least one of amorphous silicon, crystalline silicon, silicon oxide, silicon alloy, a composite of crystalline silicon and amorphous silicon, and a silicon-carbon composite.

8. The anode material according to any one of claims 1 to 4, wherein the silicon particles have average particle size ranging from 1nm to 500nm.

9. The anode material according to any one of claims 1 to 4, wherein a mass content of silicon in the silicon particles is greater than or equal to 99%.

10. The anode material according to any one of claims 1 to 4, wherein the anode material further comprises a carbon layer located on at least part of a surface of the active material.

11. The anode material according to claim 10, wherein the carbon layer comprises at least one of graphitic carbon and amorphous carbon.

12. The anode material according to any one of claims 1 to 4, wherein the anode material has a median particle diameter D50 less than or equal to $10\mu m$.

13. The anode material according to any one of claims 1 to 4, wherein the anode material has a specific surface area less than or equal to $5m^2/g$.

14. A lithium ion battery, comprising the anode material according to any one of claims 1-13.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| | International application No. |
|---|---|
| | **PCT/CN2024/102624** |

**A.     CLASSIFICATION OF SUBJECT MATTER**

H01M4/38(2006.01)i;  H01M10/0525(2010.01)i;  H01M4/62(2006.01)i

According to International Patent Classification (IPC) or to both national classification and IPC

**B.     FIELDS SEARCHED**

Minimum documentation searched (classification system followed by classification symbols)

IPC:  H01M4/-; H01M10/-

Documentation searched other than minimum documentation to the extent that such documents are included in the fields searched

Electronic data base consulted during the international search (name of data base and, where practicable, search terms used)

CNTXT, CNKI, Web of Science, ENTXT, EXTXTC, VCN, DWPI: 膨胀率, 容量保持率, 碳, 硅, 负极, 阳极, 气相沉积, 包覆, 孔, 脱锂, 嵌锂, dQ/dV, swell+, capacity retention ratio, carbon, C, silicon, Si, negative electrode, anode, vapor deposition, coating, pore+, delithiation, lithiation

**C.     DOCUMENTS CONSIDERED TO BE RELEVANT**

| Category* | Citation of document, with indication, where appropriate, of the relevant passages | Relevant to claim No. |
|---|---|---|
| PA | CN 118099404 A (BTR NEW MATERIAL GROUP CO., LTD. et al.) 28 May 2024 (2024-05-28) <br> description, embodiment 1 | 1-14 |
| A | CN 116053434 A (NINGDE AMPEREX TECHNOLOGY LTD.) 02 May 2023 (2023-05-02) <br> description, paragraphs 4-22, and embodiment 1 | 1-14 |
| A | CN 116605875 A (JINGHE XINCHENG SHAANMEI TECHNOLOGY RESEARCH INSTITUTE NEW ENERGY MATERIAL CO., LTD.) 18 August 2023 (2023-08-18) <br> description, embodiment 1 | 1-14 |
| A | CN 115911292 A (BTR NEW MATERIAL GROUP CO., LTD. et al.) 04 April 2023 (2023-04-04) <br> claim 1 | 1-14 |
| A | KR 20200080490 A (ULSAN NATIONAL INSTITUTE OF SCIENCE AND TECHNOLOGY) 07 July 2020 (2020-07-07) <br> see claim 1 | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2024** | **13 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/102624**

| Patent document cited in search report | | | Publication date (day/month/year) | Patent family member(s) | | | Publication date (day/month/year) |
|---|---|---|---|---|---|---|---|
| CN | 118099404 | A | 28 May 2024 | None | | | |
| CN | 116053434 | A | 02 May 2023 | WO | 2024141042 | A1 | 04 July 2024 |
| CN | 116605875 | A | 18 August 2023 | None | | | |
| CN | 115911292 | A | 04 April 2023 | None | | | |
| KR | 20200080490 | A | 07 July 2020 | KR | 102213082 | B1 | 08 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311426902

- CN 202311435362